# EUROPEAN PATENT SPECIFICATION

(11) **EP 2 031 211 B1**
(45) Date of publication and mention of the grant of the patent: **02.10.2013**
(21) Application number: 08252885.2
(22) Date of filing: 29.08.2008
(51) Int. Cl.: F02B 61/02, F01M 11/02, F16H 9/18

(54) **Engine and straddle type vehicle**
Motor und im Grätschsitz zu führendes Fahrzeug
Moteur et véhicule de type chariot cavalier

(30) Priority: 31.08.2007 JP 2007227088; 03.12.2007 JP 2007312913
(43) Date of publication of application: 04.03.2009
(73) Proprietor: Yamaha Hatsudoki Kabushiki Kaisha, Iwata-shi, Shizuoka 438-8501 (JP)
(72) Inventor: Nakayama, Yoshiharu, Shizuoka-ken 438-8501 (JP)
(74) Representative: Moreland, David

(56) References cited:
- EP-A1- 1 498 592
- EP-A2- 1 178 193
- EP-A2- 1 862 704
- JP-A- 2007 113 637

## Description

### FIELD OF THE INVENTION

The present invention relates to an engine and a straddle-type vehicle provided with the same, and more particularly, relates to securing a capacity of a transmission oil pan.

### BACKGROUND OF THE INVENTION

Conventionally, as an example of engine equipped with a transmission having a drive pulley and a driven pulley, JP-A-2007-113637 describes an automobile engine in which a primary shaft of a belt-type continuously variable transmission is coaxially disposed on a crankshaft and in which an oil pan for receiving transmission oil is provided below the primary shaft.

However, in the above conventional engine layout, the oil pan is disposed below the primary shaft that is itself coaxially disposed on the crankshaft of the engine. Therefore, the engine has to be large in the direction the crankshaft extends. Therefore, when the such an engine is mounted on a straddle-type vehicle with the crankshaft aligned with a vehicle width direction, the engine width has to be minimised. As a result, there is a problem that the capacity of the oil pan is insufficient.

The present invention has been made in view of the foregoing problem, and thus one of the objects of an embodiment of the invention is to provide an engine in which a capacity of a transmission oil pan can be maintained while minimising engine width.

EP-A-1 178 193 discloses an engine having the features of the preamble of claim 1.

### SUMMARY OF THE INVENTION

An engine according to one embodiment of the present invention includes: a crankshaft, a transmission having a drive pulley and a driven pulley; a first oil pan for receiving oil supplied to the crankshaft; and a second oil pan for receiving oil supplied to the transmission and separately formed from the first oil pan. The crankshaft extends in a vehicle width direction of a straddle-type vehicle on which the engine is to be mounted. A drive pulley shaft for driving the drive pulley is disposed parallel to the crankshaft. At least a portion of the first oil pan and at least a portion of the second oil pan are respectively disposed in parallel with the crankshaft and the drive pulley shaft. The second oil pan has a portion extending across at least one of: a center line of the engine , and, in use, a center line of the vehicle, in the vehicle width direction. In this way, it is possible to provide an engine in which the capacity of a transmission oil pan can be maintained while engine width is minimised.

A straddle-type vehicle according to one embodiment of the present invention is characterized by including any of the engines described above. Thus, it is possible to provide a straddle-type vehicle with an engine in which the capacity of a transmission oil pan can be secured sufficiently while the enlargement of the engine in the vehicle width direction is suppressed. Here, a straddle-type vehicle may be a motorcycle (including a scooter), a four-wheeled buggy, or a snowmobile, for example.

Description will hereinafter be made of an engine and a straddle-type vehicle according to an embodiment of the invention with reference to the drawings.

### BRIEF DESCRIPTION OF THE DRAWINGS

FIG. 1 is a left side view of a motorcycle according to an embodiment of the present invention.
FIG. 2 is a left side view of an engine case according to an embodiment of the present invention.
FIG. 3 is a right side view of the engine case according to an embodiment of the present invention.
FIG. 4 is another example of the right side view of the engine case according to an embodiment of the present invention.
FIG. 5 is a sectional view of the engine taken along the line V-V of FIG. 2.
FIG. 6 is a sectional view of the engine taken along the line VI-VI of FIGs. 2 to 4.
FIG. 7 is a sectional view of the engine taken along the line VII-VII of FIG. 4.
FIG. 8 is an explanatory view for showing relative positions of shafts when viewed from the left side of an engine.
FIG. 9 is an example of a plan view of the motorcycle according to an embodiment of the present invention.
FIG. 10 is another example of the left side view of the engine case according to an embodiment of the present invention.
FIG. 11 is further another example of the right side view of the engine case according to an embodiment of the present invention.
FIG. 12 is a rear view of the engine case according to an embodiment of the present invention.
FIG. 13 is a bottom view of the engine case according to an embodiment of the present invention.
FIG. 14 is a sectional view taken along a crankcase dividing surface of the engine according to an embodiment of the present invention.
FIG. 15 is a sectional view of the engine case taken along the line XV-XV of FIG. 14.

### DETAILED DESCRIPTION OF THE DRAWINGS

In this embodiment, the engine according to the invention is realized as a water-cooled, four-stroke, in-line three-cylinder engine, and the straddle-type vehicle according to the invention is realized as a scooter-type motorcycle. In this embodiment, directions of front, rear, left, right, up, and down are directions of front, rear, left, right, up, and down seen from a rider operating the motorcycle. A right-and-left direction may also be referred to as a vehicle width direction.

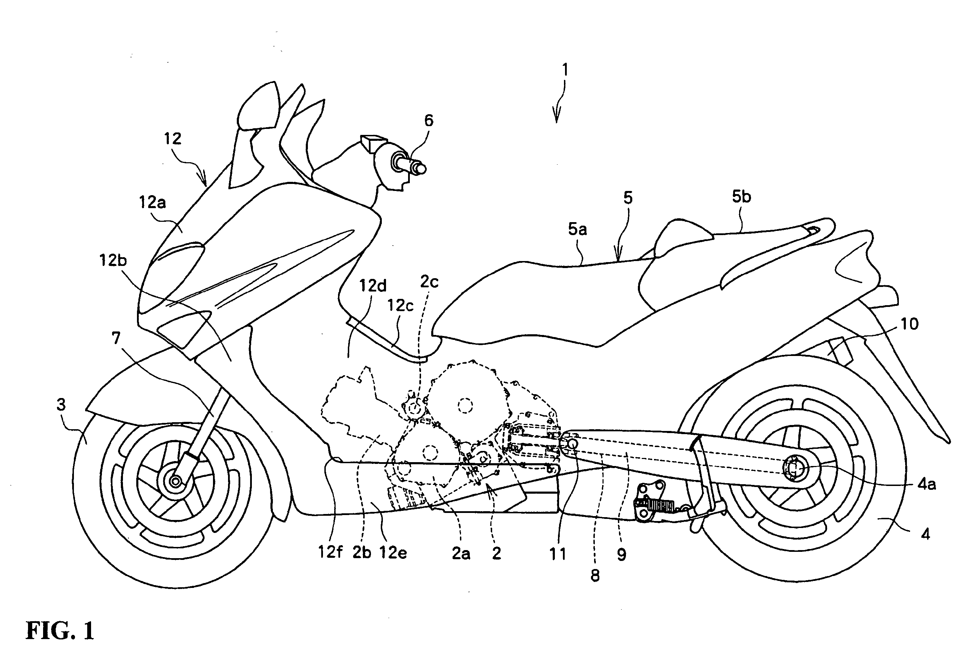

The motorcycle will be described first. FIG. 1 is a left side view of a motorcycle 1. As shown in FIG. 1, the motorcycle 1 includes a front wheel 3 and a rear wheel 4 rotatably supported by a body thereof, a seat 5 which a driver sits on, handlebars 6 for steering the front wheel 3, and an engine 2 for producing power to drive the rear wheel 4.

The seat 5 behind the handlebars 6 extends from an intermediate position between the front wheel 3 and the rear wheel 4 to a position above the rear wheel 4. This seat 5 is a tandem seat having a front seating section 5a on which the driver sits in front and a rear seating section 5b on which a passenger sits above the rear wheel. The driver seated on the seat 5 manipulates the handlebars 6 to turn the front wheel 3 from side to side, which is rotatably supported at lower ends of a pair of a right and a left front forks 7.

The engine 2 is fixed to a body frame (not shown) constituting a body framework of the motorcycle 1. The engine 2 has a cylinder section 2b for accommodating pistons (not shown). The cylinder section 2b extends upward while inclining forward from a position below the front seating section 5a of the seat 5. The engine 2 will be described in detail later.

The motorcycle 1 is also equipped with a shaft-driven driveline 8 for transmitting driving force of the engine 2 to the rear wheel 4. More specifically, the motorcycle 1 has a drive shaft 9 extending from the engine 2 to the rear wheel 4 in the left side of the body.

The drive shaft 9 is supported to be vertically swingable about a pivot shaft 11 extended in the vehicle width direction. A bevel gear formed on a rear end of the drive shaft 9 meshes with a bevel gear formed on a left end of a rear wheel rotating shaft 4a, which supports the rear wheel 4 for rotation. Thus, the rear wheel 4 is supported to be vertically swingable about the pivot shaft 11.

The motorcycle 1 also includes a body cover 12 for covering the body thereof. The body cover 12 includes: a front cowling 12a formed above the front wheel 3 to cover a front section of the body; leg shields 12b formed to cover the front of the legs of the driver seated on the front seating section 5a of the seat 5; a center cover 12c formed to cover an upper section of the body in a position between the handlebars 6 and the seat 5; a side cover 12d formed to cover the right side and the left side of the body (that is, lateral sides in the vehicle width direction) below the center cover 12c; and a pair of a right and a left footboards 12e formed below the side cover 12d with a pair of a right and a left flat surfaces 12f which the driver seated on the front seating section 5a of the seat 5 puts his/her right and left feet on.

The center cover 12c extends forward while inclining upward from a position below a front end of the seat 5. The inclination of the center cover 12c generally corresponds with that of the cylinder section 2b of the engine 2 disposed below the center cover 12c.

The engine 2 can be started by a starter motor 2c to start driving of the motorcycle 1. Air and a fuel are supplied from an intake port (not shown) to the cylinder section 2b of the started engine 2 by a fuel injection method. The engine 2 produces power by combusting the fuel in the cylinder section 2b. This power is transmitted to the rear wheel 4 via the drive shaft 9. Consequently, the rear wheel 4 rotates, and the motorcycle 1 travels forward. Exhaust gases of the engine 2 discharged from an exhaust port (not shown) in the cylinder section 2b are released into the atmosphere through a silencer (muffler) 10.

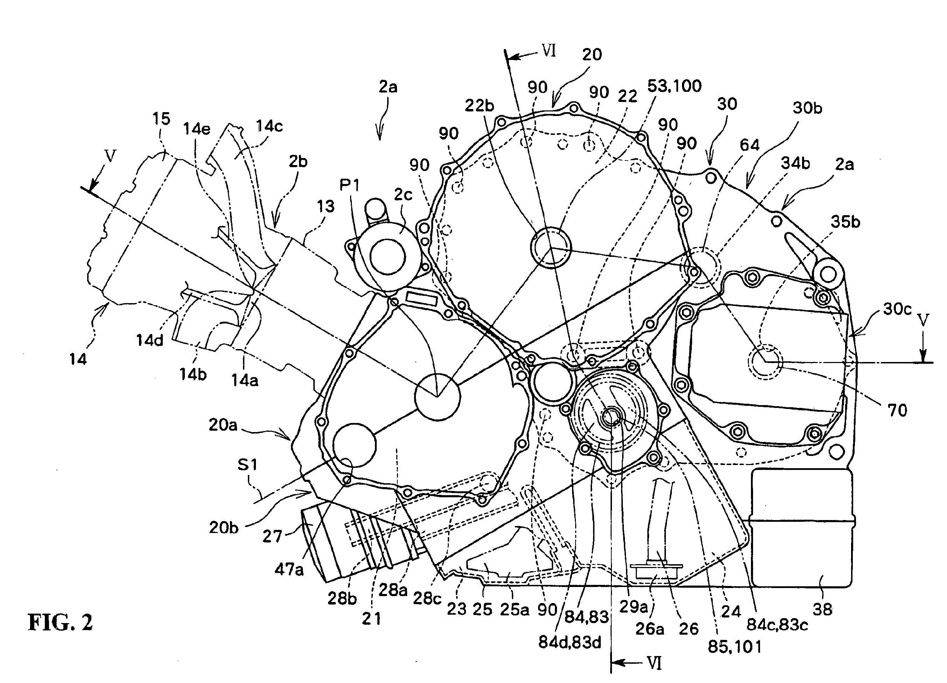

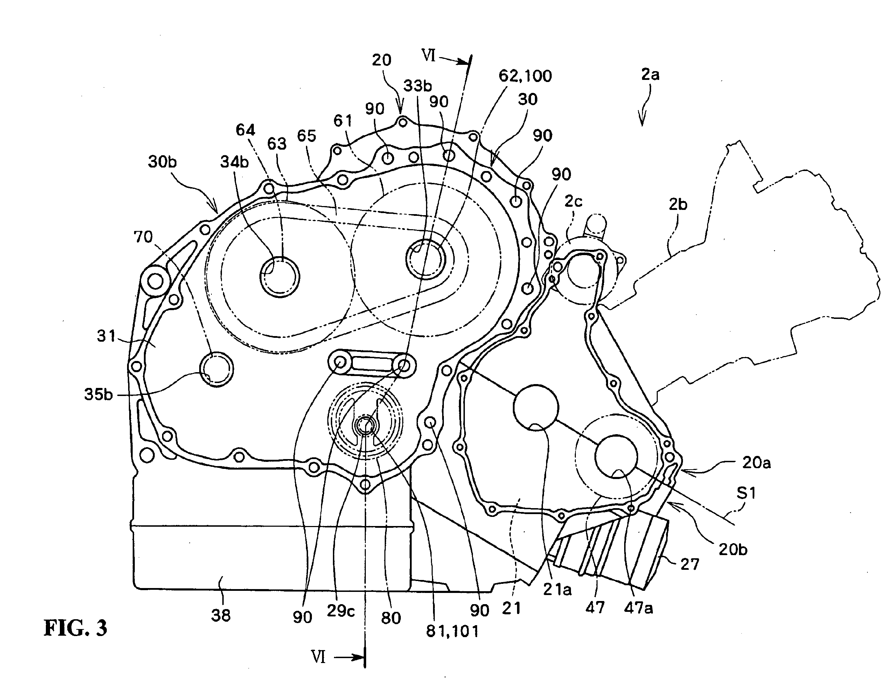

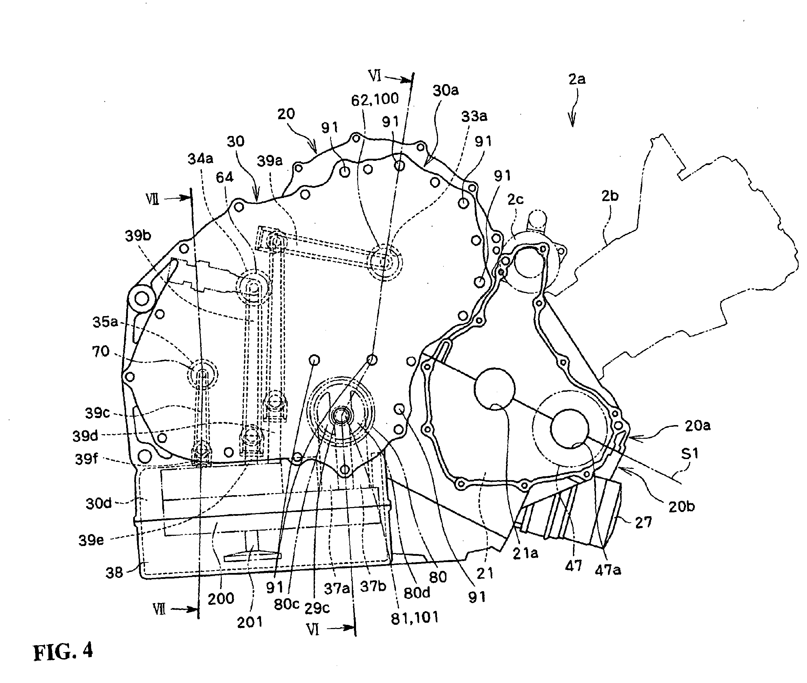

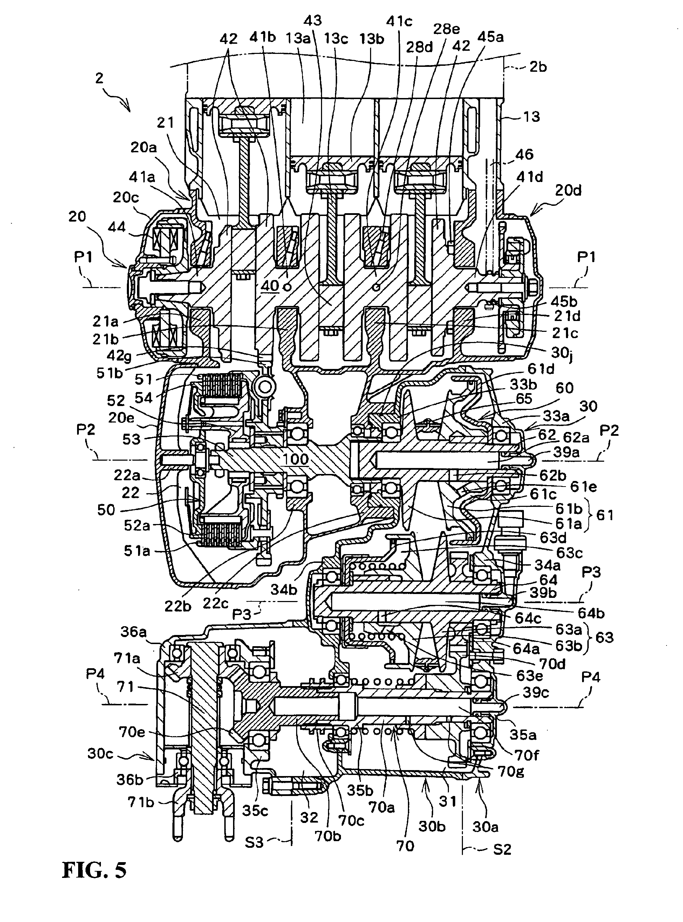

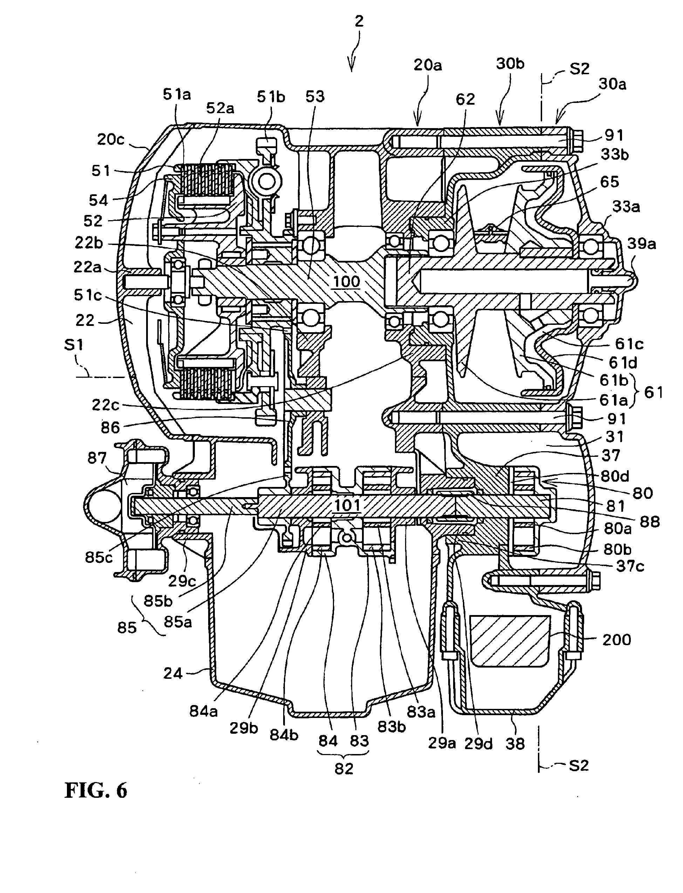

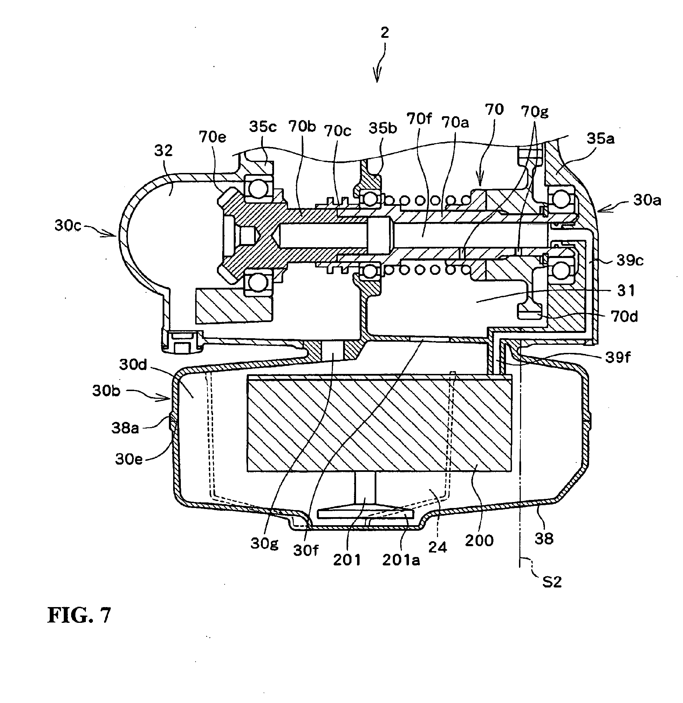

Next, the engine 2 will be described in detail. FIG. 2 is a left side view of an engine case 2a constituting a framework of the engine 2. FIGs. 3 and 4 are right side views of the engine case 2a. FIGs. 2 and 3 show the engine case 2a in a state where a cover section for partially covering a lateral side in the vehicle width direction is removed. FIG. 5 is a sectional view of the engine 2 taken along the line V-V of FIG. 2. FIG. 6 is a sectional view of the engine 2 taken along the line VI-VI of FIGs. 2 to 4. FIG. 7 is a sectional view of the engine 2 taken along the line VII-VII of FIG. 4.

The engine case 2a has a crankcase 20 for accommodating a crankshaft 40 and a transmission case 30 for accommodating a transmission 60. As shown in FIG. 5, the transmission 60 is a wet-type continuously variable transmission having: a drive pulley 61; a drive pulley shaft 62 for driving the drive pulley; a driven pulley 63; a driven pulley shaft 64 for driving the driven pulley; an endless metal belt 65 wound between the drive pulley 61 and the driven pulley 63.

As shown in FIGs. 2 to 4, the crankcase 20 can be divided into upper and lower sections on a dividing surface S1 passing through an axial center P1 of the crankshaft 40. In other words, as two case sections that are formed individually and dividable into the upper and the lower sections, the crankcase 20 has an upper case section 20a constituting a section above the dividing surface S1 (that is, in the cylinder section 2b side) and a lower case section 20b constituting a section below the dividing surface S1. The crankcase 20 is constructed by joining a mating surface at a bottom of the upper case section 20a with a mating surface on top of the lower case section 20b on the dividing surface S1.

As shown in FIGs. 5 to 7, the transmission case 30 is configured to be dividable into a right and a left sections on a dividing surface S2 and a dividing surface S3, both of which are perpendicular to the axial center P1 of the crankshaft 40. In other words, the transmission case 30 has a right case section 30a, a left case section 30b, and a left end case section 30c as three case sections that are formed individually and separable from each other into the right and the left sections. The right case section 30a constitutes a section further on the right of the right dividing surface S2 and covers the right side of the transmission 60 (outside in the vehicle width direction). The left case section 30b constitutes a section between the dividing surface S2 and the left dividing surface S3 and covers the left side of the transmission 60 (inside in the vehicle width direction). The left end case section 30c constitutes a section further on the left of the dividing surface S3 and partially covers the left side of the left case section 30b. The transmission case 30 is constructed by joining a mating surface on a left end of the right case section 30a with a mating surface on a right end of the left case section 30b on the dividing surface S2, and by joining a mating surface on a left end of a portion of the left case section 30b with a mating surface on a right end of the left end case section 30c on the dividing surface S3.

Then, the upper case section 20a and the lower case section 20b of the crankcase 20 are respectively coupled to a portion and another portion of the transmission case 30, and thereby the crankcase 20 and the transmission case 30 are integrated to constitute the engine case 2a.

In other words, as shown in FIG. 2, rear portions of the upper case section 20a and the lower case section 20b and a front portion of the transmission case 30 are disposed in positions where they overlap each other in the vehicle width direction. Then, the upper case section 20a and a portion of the transmission case 30 overlapping the upper case section 20a are fastened and secured in the vehicle width direction while the lower case section 20b and another portion of the transmission case 30 overlapping the lower case section 20b are fastened and secured in the vehicle width direction.

More specifically, as shown in FIGs. 2 and 5, on the right of a portion (clutch chamber 22) at the back of a portion where the crankshaft 40 is accommodated (crank chamber 21) in the upper case section 20a and the lower case section 20b, front portions of the right case section 30a and the left case section 30b are disposed across both of the case sections of the upper case section 20a and the lower case section 20b (across the dividing surface S1).

Then, as shown in FIGs. 2 and 3, a plurality of fastening holes 90 are formed in corresponding positions on the rear portions of the upper case section 20a and the lower case section 20b, the front portion of the left case section 30b, and the front portion of the right case section 30a (see FIG. 4) that are aligned in the vehicle width direction. Furthermore, as shown in FIGs. 4 and 6, bolt members 91 extending through the three case sections in the vehicle width direction are inserted in the plural fastening holes 90.

More specifically, three case sections, which are the upper case section 20a, the left case section 30b, and the right case section 30a, are fastened in the vehicle width direction by the plural bolt members 91 while the other three case sections, which are the lower case section 20b, the left case section 30b, and the right case section 30a, are also fastened in the vehicle width direction by the same.

As described above, the upper case section 20a and the lower case section 20b are each integrally connected with the left case section 30b and the right case section 30a. Therefore, rigidity of the engine case 2a, especially that of the crankcase 20, is increased.

As shown in FIGs. 2 to 5, the crank chamber 21 extended in the vehicle width direction is formed in the front portion of the crankcase 20 in such an engine case 2a. The crankshaft 40 is accommodated in the crank chamber 21.

The above-mentioned cylinder section 2b extends upward while inclining forward above the crank chamber 21. As shown in FIG. 5, this cylinder section 2b has: a cylinder block 13 in which three cylinders 13a for accommodating three pistons 13b are formed in line in the vehicle width direction; a cylinder head 14 in which three combustion chambers 14a for compressing and combusting the fuel are formed in corresponding positions to the three cylinders 13a as shown in FIG. 2; and a cover 15 for closing a top end of the cylinder head 14.

As shown in FIG. 2, corresponding to each of the three combustion chambers 14a, an intake port 14b and an exhaust port 14c are formed in the cylinder head 14. One end of each port is open to a lateral side of the cylinder head 14 while the other end is open to the combustion chamber 14a. The cylinder head 14 also accommodates an intake valve 14d that opens and closes an opening of each of the intake ports 14b to the combustion chamber 14a and an exhaust valve 14e that opens and closes an opening of each of the exhaust ports 14c to the combustion chamber 14a. A double overhead camshaft (DOHC) system is adopted for the engine 2 as a drive mechanism of the intake valves 14d and the exhaust valves 14e.

Meanwhile, as shown in FIG. 5, the crankshaft 40 accommodated in the crank chamber 21 of the crankcase 20 has: four journals 41a to 41d, each formed in a cylindrical shape and extending in the vehicle width direction in a manner that an axial center thereof corresponds to the axial center P1 of the crankshaft 40; three pairs of crank webs 42, each formed in a plate shape and extending in a perpendicular direction to the axial center P1; and three crankpins 43, each extending in the vehicle width direction to connect a pair of the crank webs 42 in a position apart from the axial center P1. The journals 41a to 41d, the cranks webs 42, and the crankpins 43 are integrally formed.

The three pairs of the crank webs 42 are formed in positions corresponding to the three cylinders 13a formed in the cylinder block 13. Then, the three crankpins 43 are each coupled to a lower end of a pillar-shaped connecting rod 13c supporting the piston 13b from below.

The crankshaft 40 is supported in the crankcase 20 to rotate about the axial center P1 in accordance with reciprocating motion of the three pistons 13b in the cylinders 13a that are coupled to the crankshaft 40 via the connecting rods 13c.

More specifically, as shown in FIG. 5, a journal bearing 21a for supporting the journal 41a that constitutes a left end portion of the crankshaft 40 is formed on a left wall for closing the left side of the crank chamber 21. A journal bearing 21d for supporting the journal 41d that constitutes a right end portion of the crankshaft 40 is formed on a right wall for closing the right side of the crank chamber 21. Furthermore, in the crank chamber 21, a journal bearing 21b is formed to support the journal 41b that extends between a left end pair of the crank webs 42 and a middle pair of the crank webs 42. A journal bearing 21c is also formed to support the journal 41c that extends between the middle pair of the crank webs 42 and a right end pair of the crank webs 42. The journals 41a to 41d of the crankshaft 40 are respectively supported by the journal bearings 21a to 21d with plain bearings (not shown) formed in a cylindrical shape with a thin wall and disposed to cover peripheries of the journals 41a to 41d.

A left end portion of the crankshaft 40 projects to the left of the crank chamber 21, and a generator 44 for producing electric power in accordance with rotation of the crankshaft 40 is mounted on the left end of the crankshaft 40. The generator 44 has a rotor having a magnet and integrally rotating with the crankshaft 40, and a stator coil disposed facing the magnet. Then, the generator 44 is able to produce electric power with the rotor rotating in conjunction with the crankshaft 40. The electric power produced by the generator 44 is supplied to, for example, a battery (not shown) provided in the motorcycle 1 (see FIG. 1). A cover member 20c for covering the outside of the generator 44 in the vehicle width direction is removably attached to the left side of the crank chamber 21.

As shown in FIGs. 2 to 4, a gear 45a that meshes with a gear (not shown) on a periphery of a balancer 47 (see FIGs. 2 to 4) disposed below the crankshaft 40 is formed between the right end crank web 42 of the crankshaft 40 and the journal bearing 21d for supporting the right end journal 41d. The balancer 47 is rotatably supported in the crankcase 20 with a shaft (not shown) extending in the vehicle width direction. That is, a bearing 47a supporting the shaft for driving the balancer 47 is formed in the crankcase 20. This balancer 47 is disposed in front of and slightly below the crankshaft 40 so that an axial center of the balancer 47 is located on the dividing surface S1 of the crankcase 20.

Also, as shown in FIG. 5, a right end portion of the crankshaft 40 projects to the right of the crank chamber 21, and a gear 45b is formed on the right end portion of the crankshaft 40. A chain 46 for opening and closing the intake valves 14d and the exhaust valves 14e (see FIG. 2) in the cylinder head 14 shown in FIG. 2 in the DOHC system is wound around the gear 45b. A cover member 20d for covering the lateral side of the right end of the crankshaft 40 in the vehicle width direction is removably attached to the right side of the crank chamber 21.

As shown in FIG. 5, the engine 2 is also equipped with a clutch 50 that can connect or disconnect the transmission of driving force from the crankshaft 40 to the drive pulley shaft 62 of the transmission 60. This clutch 50 is accommodated in the crankcase 20.

More specifically, the clutch chamber 22 for accommodating the clutch 50 is formed in parallel with the crank chamber 21 in the crankcase 20. A left portion of the crank chamber 21 projects rearward to form this clutch chamber 22. A left wall for closing a left side of the clutch chamber 22 is formed as a detachable cover member 20e.

In this embodiment, the clutch 50 is a multi-plate clutch. This clutch 50 has: a clutch upstream section 51 constantly rotating in conjunction with the crankshaft 40; a clutch downstream section 52 that can be engaged with the clutch upstream section 51; a clutch shaft 53 integrally rotating with the clutch downstream section 52; and a pressure plate 54 for controlling engagement and disengagement of the clutch upstream section 51 with the clutch downstream section 52.

A gear 51b is formed on a periphery of the clutch upstream section 51. This gear 51b meshes with a gear 42g formed on a periphery of the right crank web 42 in the left end pair of the crank webs 42 in the crankshaft 40. Therefore, while the crankshaft 40 rotates, the clutch upstream section 51 keeps rotating in conjunction with the crankshaft 40.

The clutch upstream section 51 has: a plurality of upstream discs 51a disposed with predetermined spacing between one upstream disc 51a and another in the vehicle width direction; and a gear 51b disposed on the right of the plural upstream discs 51a. Meanwhile, the clutch downstream section 52 has a plurality of downstream discs 52a disposed with predetermined spacing between one downstream disc 52a and another in the vehicle width direction. The upstream discs 51a and the downstream discs 52a are alternatively disposed to overlap each other in the vehicle width direction. The pressure plate 54 disposed on the left of the upstream discs 51a and the downstream discs 52a is urged to the right by a spring, which is not shown, and presses the upstream discs 51a against the downstream discs 52a. Consequently, the clutch upstream section 51 and the clutch downstream section 52 are engaged. In a state where the clutch upstream section 51 and the clutch downstream section 52 are engaged (hereinafter referred to as an "engaged state" ), the clutch upstream section 51, the clutch downstream section 52 and the clutch shaft 53 rotate integrally, and rotational driving force of the crankshaft 40 is transmitted to the clutch shaft 53.

On the other hand, the engagement of the upstream discs 51a with the downstream discs 52a can be cancelled by moving the pressure plate 54 to the left with operation of a rod (not shown) connected to the pressure plate 54. In such a state where the engagement of the clutch upstream section 51 with the clutch downstream section 52 is cancelled (hereinafter referred to as a " disengaged state " ), only the clutch upstream section 51 rotates, and thus, rotational driving force of the crankshaft 40 is not transmitted to the clutch shaft 53. The above-mentioned rod for switching the engaged state and the disengaged state of the clutch 50 can be operated by, for example, the driver of the motorcycle 1 with a clutch lever (not shown) provided on the handlebars 6 (see FIG. 1) or by an actuator, which is not shown, provided in the motorcycle 1. This actuator can be operated by hydraulic pressure or a motor, for example, on the basis of an electric instruction input by the driver via an instruction input means (a button, etc.), which is not shown but is provided in the motorcycle 1, or on the basis of an electric instruction output from an Engine Control Unit (ECU), which is not shown but is provided in the motorcycle 1, in accordance with speed of the engine 2 and the like. The clutch 50 can also be a centrifugal clutch that switches the engaged state and the disengaged state in accordance with centrifugal force associated with rotation of the clutch upstream section 51.

As shown in FIGs. 2 and 5, the clutch shaft 53 is formed separately from the crankshaft 40 and is disposed parallel to the crankshaft 40 in a position adjacent to the crankshaft 40. In addition, the clutch shaft 53 is disposed behind the crankshaft 40 and above the dividing surface S1 of the crankshaft 40 and the crankcase 20.

This clutch shaft 53 is rotatably supported in the crankcase 20. More specifically, as shown in FIG. 5, a left clutch shaft bearing 22a for supporting a left end of the clutch shaft 53 is formed on the left wall of the clutch chamber 22. A middle clutch shaft bearing 22b for supporting a middle portion of the clutch shaft 53 is formed on a right wall of the clutch chamber 22. Furthermore, in the right of the clutch chamber 22, a right clutch shaft bearing 22c for supporting a right end portion of the clutch shaft 53 is formed on a portion of the rear wall of the crank chamber 21 further projecting to the rear. The left clutch shaft bearing 22a, the middle clutch shaft bearing 22b, and the right clutch shaft bearing 22c are all formed in the upper case section 20a (see FIG. 2). The clutch shaft 53 is supported by each of the bearings 22a to 22c with a ball bearing.

As shown in FIG. 2, a crankcase-side oil pan 23 for storing lubricating oil is formed in a portion of a bottom section of the crankcase 20 below the crank chamber 21. Lubricating oil flows down by gravitation from the crank chamber 21 and the clutch chamber 22 in the crankcase 20 to the crankcase-side oil pan 23. An oil tank 24 for storing lubricating oil transferred from the crankcase-side oil pan 23 is formed in another portion of the bottom section of the crankcase 20, which is adjacent to the crankcase-side oil pan 23, below the clutch chamber 22.

As shown in FIGs. 2 and 6, the engine 2 includes a crankcase-side oil pump 82 for supplying lubricating oil to a motor section including such as the crankshaft 40, the cylinder section 2b, the clutch 50 (see FIG. 5) and upstream of the clutch 50 in a driving force transmission passage in the engine 2. This crankcase-side oil pump 82 is accommodated in the crankcase 20, is positioned between the clutch 50 and the drive pulley 61 in the vehicle width direction (see FIG. 6), and is disposed below the clutch 50 and the drive pulley 61 in a side view (see FIG. 2).

The crankcase-side oil pump 82 has: a scavenge pump 83 for transferring lubricating oil in the crankcase-side oil pan 23 to the oil tank 24; and a feed pump 84 for sending lubricating oil in the oil tank 24 to each component of the engine 2 with pressure. The scavenge pump 83 and the feed pump 84 are integrally configured and are supported between a right pump support section 29a and a left pump support section 29b as portions of the crankcase 20. In this embodiment, the scavenge pump 83 and the feed pump 84 are both trochoid pumps and respectively have a pair of inner rotors 83a, 84a and outer rotors 83b, 84b.

As shown in FIG. 2, an upper end of a strainer 25 for sucking lubricating oil from the crankcase-side oil pan 23 into the scavenge pump 83 is connected to the scavenge pump 83. An intake section 25a for sucking lubricating oil in the crankcase-side oil pan 23 is formed at a lower end of the strainer 25. In addition, an oil flow passage (not shown) for guiding lubricating oil discharged from the scavenge pump 83 to the oil tank 24 is formed between the scavenge pump 83 and an upper end of the oil tank 24.

As shown in FIG. 2, an upper end of a strainer 26 for sucking lubricating oil from the oil tank 24 into the feed pump 84 is connected to the feed pump 84. An intake section 26a for sucking lubricating oil in the oil tank 24 is formed at a lower end of this strainer 26. In addition, an oil flow passage 28a for guiding lubricating oil discharged from the feed pump 84 to an oil filter 27 is formed between the feed pump 84 and the oil filter 27 formed in the front portion of the crankcase 20.

Furthermore, as shown in FIG. 2, a main oil flow passage (main gallery) 28c extending in the vehicle width direction is formed below the crank chamber 21 in the crankcase 20, and an oil flow passage 28b is also formed between the main oil flow passage 28c and the oil filter 27. Lubricating oil pumped from the oil tank 24 to the oil filter 27 by the feed pump 84 is filtered by an element (not shown) included in the oil filter 27, and then flows into the main oil flow passage 28c through the oil flow passage 28b extending rearward from the oil filter 27. Following this, as shown in FIG. 5, lubricating oil pumped through the main oil flow passage 28c is supplied to the crank chamber 21 and the cylinder section 2b through an oil injection passage 28d formed in each of the journal bearings 21a to 21d for supporting the journals 41a to 41d of the crankshaft 40 and through an oil flow passage 28e formed inside each of the journals 41a to 41d.

As shown in FIG. 6, in the crankcase 20, the engine 2 is also equipped with a crankcase-side oil pump shaft 85a driving the crankcase-side oil pump 82 and a cooling water pump shaft 85b driving a cooling water pump 87 for circulating cooling water in the engine 2. The respective inner rotors 83a, 84a of the scavenge pump 83 and the feed pump 84 are connected to a periphery of the crankcase-side oil pump shaft 85a and integrally rotate with the crankcase-side oil pump shaft 85a. The cooling water pump 87 is attached to a left end of the cooling water pump shaft 85b. The crankcase-side oil pump shaft 85a and the cooling water pump shaft 85b are separately formed from each other and are coaxially coupled. More specifically, a left end of the crankcase-side oil pump shaft 85a and a right end of the cooling water pump shaft 85b are respectively formed with a projection and a recess whose shapes correspond to each other. The left end of the crankcase-side oil pump shaft 85a is coupled to the right end of the cooling water pump shaft 85b by fitting the projection to the recess. As a result, an axial center of the crankcase-side oil pump shaft 85a is oriented to that of the cooling water pump shaft 85b to constitute a single crankcase-side pump shaft 85. Therefore, the crankcase-side oil pump shaft 85a and the cooling water pump shaft 85b rotate integrally.

This crankcase-side pump shaft 85 is formed separately from the crankshaft 40 (see FIG. 5) and the clutch shaft 53 and is disposed parallel to the clutch shaft 53 in a position adjacent to the clutch shaft 53. The crankcase-side pump shaft 85 is also disposed behind the crankshaft 40 and below the drive pulley shaft 62 and the driven pulley shaft 64.

This crankcase-side pump shaft 85 is rotatably supported by the crankcase 20. More specifically, as shown in FIG. 6, a left crankcase-side pump shaft bearing 29c for supporting a left end portion of the crankcase-side pump shaft 85 is formed on the left wall of the crankcase 20 for closing the left side of the crankcase-side oil pump 82. A middle portion of the crankcase-side pump shaft 85 is supported by the right pump support section 29a and the left pump support section 29b via the crankcase-side oil pump 82. Furthermore, a right crankcase-side pump insertion section 29d through which a right end portion of the crankcase-side pump shaft 85 is inserted is formed on the right wall of the crankcase 20 for closing the right side of the crankcase-side oil pump 82.

An intermediate gear 86 rotatably supported by the crankcase 20 is disposed between the crankcase-side pump shaft 85 and the clutch shaft 53. A gear 51c that meshes with the intermediate gear 86 is formed on the periphery of the clutch upstream section 51 of the clutch 50, and a gear 85c that also meshes with the intermediate gear 86 is attached to a periphery of the crankcase-side pump shaft 85. That is, the clutch upstream section 51 and the crankcase-side pump shaft 85 are coupled to each other via the intermediate gear 86.

This makes it possible for the crankcase-side pump shaft 85 to rotate in conjunction with the crankshaft 40 regardless of connection or disconnection of driving force transmission by the clutch 50. Consequently, the crankcase-side pump shaft 82 attached to the crankcase-side pump shaft 85 can continuously be driven in the disengaged state of the clutch 50 as well as in the engaged state of the clutch 50. Therefore, the crankcase-side oil pump 82 is able to supply lubricating oil to the crank chamber 21 and the cylinder section 2b via the above-mentioned oil flow passages 28a to 28e while the crankshaft 40 is rotating.

Furthermore, the cooling water pump 87 driven by rotation of the crankcase-side pump shaft 85 can also be driven continuously to circulate cooling water to each component of the engine 2 even in the disengaged state of the clutch 50.

Meanwhile, as shown in FIG. 5, the transmission 60 is accommodated in the transmission case 30. More specifically, a transmission chamber 31 extended in a longitudinal direction is formed between the right case section 30a and the left case section 30b in the transmission case 30, and the transmission 60 is accommodated in the transmission chamber 31. A front side portion of this transmission chamber 31 is disposed to the right of the clutch chamber 22 of the crankcase 20, and a rear side portion thereof extends more rearward than the crankcase 20.

The drive pulley 61 and the drive pulley shaft 62 are accommodated in the front side portion of the transmission chamber 31. The drive pulley shaft 62 is formed separately from the crankshaft 40 and the clutch shaft 53 and is disposed parallel to the crankshaft 40 in a position adjacent to the crankshaft 40.

This drive pulley shaft 62 is rotatably supported by the transmission case 30. More specifically, a right drive pulley shaft bearing 33a for supporting a right end of the drive pulley shaft 62 is formed in the right case section 30a for closing the right side of the transmission chamber 31, and a left drive pulley shaft bearing 33b for supporting a left end portion of the drive pulley shaft 62 is formed in the left case section 30b for closing the left side of the transmission chamber 31. Also, as shown in FIGs. 3 and 4, the right drive pulley shaft bearing 33a and the left drive pulley shaft bearing 33b in the transmission case 30 are both formed above the dividing surface S1 of the crankcase 20.

This drive pulley shaft 62 is coaxially coupled to the clutch shaft 53. More specifically, as shown in FIGs. 5 and 6, the right end of the clutch shaft 53 is coupled to the left end of the drive pulley 62 by means of spline connection. Consequently, the axial center of the clutch shaft 53 is oriented to that of the drive pulley shaft 62 to constitute a single shaft (hereinafter referred to as a "complex main shaft 100" ) extended in the vehicle width direction from the crankcase 20 to the transmission case 30. Thus, the clutch shaft 53 and the drive pulley shaft 62 rotate integrally.

As shown in FIGs. 5 and 6, the complex main shaft 100 is formed separately from the crankshaft 40 and is disposed parallel to the crankshaft 40 in a position adjacent to the crankshaft 40. A left end of the complex main shaft 100 is supported by the left clutch shaft bearing 22a on the crankcase 20. Also, a right end of the complex main shaft 100 is supported by the right drive pulley shaft bearing 33a in the transmission case 30. Furthermore, a middle portion of the complex main shaft 100 is supported by the right clutch shaft bearing 22c in the crankcase 20 and by the left drive pulley shaft bearing 33b in the transmission case 30. Moreover, as shown in FIGs. 2 to 4, the complex main shaft 100 is disposed behind the crankshaft 40 and above the crankshaft 40 and the dividing surface S1 of the crankcase 20.

As shown in FIGs. 5 and 6, the right clutch shaft bearing 22c for supporting the right end of the clutch shaft 53 and the left drive pulley shaft bearing 33b for supporting the left end of the drive pulley shaft 62 are formed in shapes which correspond with each other and are fitted to each other. More specifically, a cylindrical projection projecting to the right from the crankcase 20 is formed in the right clutch shaft bearing 22c around the right end portion of the clutch shaft 53. Meanwhile, a cylindrical projection projecting to the left from the left case section 30b is formed in the left drive pulley shaft bearing 33b around the left end portion of the drive pulley shaft 62. Here, an inner diameter of the cylinder of the right clutch shaft bearing 22c is generally equal to an outer diameter of the left drive pulley shaft bearing 33b, and the cylinder of the left drive pulley shaft bearing 33b is fitted into that of the right clutch shaft bearing 22c. An O-ring 30j for sealing is held between an inner periphery of the cylinder of the right clutch shaft bearing 22c and an outer periphery of the cylinder of the left drive pulley shaft bearing 33b.

Then, the drive pulley shaft 62 and the clutch shaft 53 are coupled to each other in a portion where the right clutch shaft bearing 22c is fitted to the left drive pulley shaft bearing 33b. That is, a coupling portion between the drive pulley shaft 62 and the clutch shaft 53 in the complex main shaft 100 is inserted in a fitting portion between the right clutch shaft bearing 22c and the left drive pulley shaft bearing 33b.

The transmission case 30 is coupled to both the upper case section 20a and the lower case section 20b, which are described above, mainly around the complex main shaft 100 across both upper and lower sides of the dividing section S1 of the crankcase 20. More specifically, as shown in FIGs. 2 and 3, the above-mentioned plural fastening holes 90 are formed in a surrounding portion of the clutch shaft 53 in the upper case section 20a, in a surrounding portion of the clutch shaft 53 in the lower case section 20b, and in surrounding portions of the drive pulley shaft 62 in both the right case section 30a and the left case section 30b. Then, as shown in FIGs. 4 and 6, a combination of three case sections, which are the upper case section 20a, the left case section 30b, and the right case section 30a, and another combination of three case members, which are the lower case section 20b, the left case section 30b, and the right case section 30a, are fastened by the plural bolt members 91 around the complex main shaft 100 in the vehicle width direction.

As shown in FIGs. 5 and 6, the drive pulley 61 is formed on a periphery of the drive pulley shaft 62. The drive pulley 61 has a drive-side fixed sheave 61a disposed on the inside in the vehicle width direction and a drive-side movable sheave 61b formed on the outside in the vehicle width direction. The drive-side fixed sheave 61a is integrally formed with the drive pulley shaft 62. The drive-side movable sheave 61b is formed separately from the drive pulley shaft 62, and the drive pulley shaft 62 is inserted through a central portion thereof. The drive-side movable sheave 61b is adopted to be slidable on the periphery of the drive pulley shaft 62 in a direction along an axial center P2 of the drive pulley shaft 62. A distance between the drive-side movable sheave 61b and the drive-side fixed sheave 61a changes in accordance with axial movement of the drive-side movable sheave 61b, and consequently, a diameter of a portion in the drive pulley 61 where a metal belt is wound around (hereinafter referred to as an "effective diameter" ) changes.

The sliding of this drive-side movable sheave 61b is hydraulically controlled. More specifically, a drive-side lid 61d is attached to the right side of the drive-side movable sheave 61b so as to form an enclosed space therebetween to accommodate oil for hydraulic control (hereinafter referred to as a "drive-side oil accommodating section 61c" ). When the amount of oil stored in this drive-side oil accommodating section 61c increases, the drive-side movable sheave 61b moves to the left. Then, the distance between the drive-side fixed sheave 61a and the drive-side movable sheave 61b decreases and the effective diameter of the drive pulley 61 increases. On the other hand, when the amount of oil stored in the drive-side oil accommodating section 61c decreases, the drive-side movable sheave 61b moves to the right. Then, the distance between the drive-side fixed sheave 61a and the drive-side movable sheave 61b increases and the effective diameter of the drive pulley 61 decreases.

As shown in FIG. 5, the driven pulley 63 and the driven pulley shaft 64 are accommodated behind the drive pulley 61 and the drive pulley shaft 62 in the transmission chamber 31. The driven pulley shaft 64 is formed separately from the crankshaft 40 and the clutch shaft 53 and is disposed parallel to the drive pulley shaft 62 in a position adjacent to the drive pulley shaft 62.

This driven pulley shaft 64 is rotatably supported by the transmission case 30. More specifically, a right driven pulley shaft bearing 34a for supporting a right end of the driven pulley shaft 64 is formed in the right case section 30a, and a left driven pulley shaft bearing 34b for supporting a left end portion of the driven pulley shaft 64 is formed in the left case section 30b.

As described above, the right case section 30a includes and is integrally formed with the right drive pulley shaft bearing 33a for supporting the right end of the drive pulley shaft 62 and the right driven pulley shaft bearing 34a for supporting the right end of the driven pulley shaft 64 (see FIGs. 4 and 5). Also, the left case section 30b includes and is integrally formed with the left drive pulley shaft bearing 33b for supporting the left end of the drive pulley shaft 62 and the left driven pulley shaft bearing 34b for supporting the left end of the driven pulley shaft 64 (see FIGs. 3 and 5). That is, the right drive pulley shaft bearing 33a and the right driven pulley shaft bearing 34a are integrally formed with the right case section 30a, and the left drive pulley shaft bearing 33b and the left driven pulley shaft bearing 34b are integrally formed with the left case section 30b.

As shown in FIG. 5, the driven pulley 63 is formed on the periphery of the driven pulley shaft 64. The driven pulley 63 has a driven-side fixed sheave 63a disposed on the outside in the vehicle width direction and a driven-side movable sheave 63b formed on the inside in the vehicle width direction. The driven-side fixed sheave 63a is integrally formed with the driven pulley shaft 64. Meanwhile, the driven-side movable sheave 63b is formed separately from the driven pulley shaft 64, and the driven pulley shaft 64 is inserted through a central portion thereof. Then, the driven-side movable sheave 63b is adopted to be slidable on the periphery of the driven pulley shaft 64 in a direction along an axial center P3 of the driven pulley shaft 64. A distance between the driven-side movable sheave 63b and the driven-side fixed sheave 63a changes in accordance with axial movement of the driven-side movable sheave 63b. Consequently, an effective diameter of the driven pulley 63 changes.

A driven-side lid 63d is attached to the left side of the driven-side movable sheave 63b so as to form an enclosed space therebetween to accommodate oil for hydraulic control (hereinafter referred to as a "driven-side oil accommodating section 63c" ). A coil spring for urging the driven-side movable sheave 63b to the driven-side fixed sheave 63a side is accommodated in the driven-side oil accommodating section 63c. The length of the metal belt 65 wound between the drive pulley 61 and the driven pulley 63 is constant. Therefore, when the effective diameter of the drive pulley 61 increases, the driven-side movable pulley 63b slides to the driven-side fixed sheave 63a side against urging force of the coil spring to decrease the effective diameter of the driven pulley 63. On the contrary, when the effective diameter of the drive pulley 61 decreases, the effective diameter of the driven pulley 63 increases.

Furthermore, as shown in FIG. 5, the engine 2 includes an output shaft 70 for outputting the driving force to a further downstream side transmitted from the crankshaft 40 to the driven pulley shaft 64. This output shaft 70 is formed separately from the driven pulley shaft 64 and is disposed parallel to the driven pulley shaft 64 in a position adjacent to the driven pulley shaft 64.

As shown in FIGs. 2 to 5, the entire output shaft 70 is disposed outside the crankcase 20. In other words, the output shaft 70 is entirely accommodated in the transmission case 30 behind the crankcase 20. More specifically, an output chamber 32 is formed between the left case section 30b and the left end case section 30c in the transmission case 30. A left side portion of the output shaft 70 is accommodated in the output chamber 32, and a right side portion of the output shaft 70 is accommodated in the transmission chamber 31.

The output shaft 70 is constituted by coaxially coupling an output shaft right section 70a as the right side portion accommodated in the transmission chamber 31 to an output shaft left section 70b as the left side portion accommodated in the output chamber 32. More specifically, as shown in FIG. 5, a left end of the output shaft right section 70a and a right end of the output shaft left section 70b are formed in cylindrical shapes corresponding to each other and are fitted to each other.

In addition, the output shaft right section 70a and the output shaft left section 70b are coupled to each other in a manner that they can be divided into right and left. More specifically, an engagement groove in a predetermined length that extends over the output shaft right section 70a and the output shaft left section 70b in the vehicle width direction is formed in a coupling portion between the output shaft right section 70a and the output shaft left section 70b. Meanwhile, an engaging member 70c in a cylindrical shape that extends over the output shaft right section 70a and the output shaft left section 70b in the vehicle width direction and that engages with the engagement groove is attached to a periphery of the coupling portion. A rod, which is not shown, is attached to projections formed on a periphery of this engaging member 70c. The engaging member 70c can slide on the periphery of the output shaft 70 along an axial center P4 thereof with operation of this rod. The engaging member 70c is disposed across both the output shaft right section 70a and the output shaft left section 70b in a coupling condition shown in FIG. 5. However, the engaging member 70c can also be disposed only on the periphery of the output shaft left section 70b by sliding the engaging member 70c further to the left from the left end of the output shaft right section 70a, for example with the operation of the rod by the driver of the motorcycle 1. As a result, the output shaft right section 70a and the output shaft left section 70b can be separated from each other by releasing the coupling therebetween. In this separated condition, the output shaft left section 70b can rotate independently from the output shaft right section 70a .

The output shaft 70 is rotatably supported by the transmission case 30. More specifically, a right output shaft bearing 35a for supporting a right end of the output shaft 70 (that is, a right end of the output shaft right section 70a) is formed in the right case section 30a, and a left output shaft bearing 35c for supporting a left end of the output shaft 70 (that is, a left end portion of the output shaft left section 70b) is formed in the output chamber 32 of the left end case section 30c. In addition, a middle output shaft bearing 35b for supporting a middle portion of the output shaft 70 (that is, the coupling portion between the output shaft right section 70a and the output shaft left section 70b) is formed in the left case section 30b. That is, the output shaft right section 70a and the output shaft left section 70b are coupled to each other in a through hole formed in the middle output shaft bearing 35b as a boundary between the transmission chamber 31 and the output chamber 32.

A gear 70d is integrally attached to the right end portion of the output shaft 70. This gear 70d meshes with a gear 64a attached to the right end portion of the driven pulley shaft 64. Therefore, the output shaft 70 rotates in conjunction with the driven pulley shaft 64.

In addition, as shown in FIG. 5, a coupling shaft 71 that couples the output shaft 70 to the drive shaft 9 (see FIG. 1) is accommodated in the output chamber 32. This coupling shaft 71 is formed so as to extend rearward from the left side of the output shaft 70.

A bevel gear 71a that meshes with a bevel gear 70e formed on the left end of the output shaft 70 is attached to a front end of the coupling shaft 71. Therefore, the coupling shaft 71 rotates in conjunction with the output shaft 70. A universal joint 71b for coupling a front end of the drive shaft 9 for rotation is attached to a rear end of the coupling shaft 71.

The coupling shaft 71 is rotatably supported by the transmission case 30. More specifically, a front coupling shaft bearing 36a for supporting the front end portion of the coupling shaft 71 is formed in the front portion of the output chamber 32 in the left end case section 30c, and a rear coupling shaft bearing 36b for supporting the rear end portion of the coupling shaft 71 is formed in the rear portion of the output chamber 32.

As shown in FIG. 6, the engine 2 includes a transmission-side oil pump 80 for supplying oil to the transmission 60. This transmission-side oil pump 80 is accommodated in the transmission chamber 31 of the transmission case 30. More specifically, as shown in FIGs. 3 and 4, the transmission-side oil pump 80 is located adjacent to the drive pulley 61 and the driven pulley 63 and is disposed below the drive pulley 61 and the driven pulley 63 in the transmission chamber 31.

As shown in FIG. 6, in this embodiment, the transmission-side oil pump 80 is a trochoid pump and has a pair of inner rotors 80a and outer rotors 80d. This transmission-side oil pump 80 is supported by a transmission-side pump support section 37, which is a part of the left case section 30b of the transmission case 30.

The engine 2 also includes a transmission-side pump shaft 81 for driving the transmission-side oil pump 80. The inner rotor 80a of the transmission-side oil pump 80 is connected to a periphery at the right end of the transmission-side pump shaft 81 to integrally rotate with the transmission-side pump shaft 81.

The transmission-side pump shaft 81 is formed separately from the crankshaft 40, the clutch shaft 53, the drive pulley shaft 62, and the driven pulley shaft 64, and is disposed parallel to the drive pulley shaft 62 and the driven pulley shaft 64 in a position adjacent to the drive pulley shaft 62 and the driven pulley shaft 64. Also, as shown in FIGs. 3 and 4, this transmission-side pump shaft 81 is disposed behind the crankshaft 40, in front of the output shaft 70, and below the drive pulley shaft 62 and the driven pulley shaft 64. That is, the transmission-side pump shaft 81 is disposed in a position surrounded by the crankshaft 40, the drive pulley shaft 62, the driven pulley shaft 63, and the output shaft 70, and in a position below the dividing surface S1 of the crankcase 20.

The transmission-side pump shaft 81 is rotatably supported in the transmission case 30. More specifically, as shown in FIG. 6, the transmission-side pump shaft 81 is supported by the transmission-side pump support section 37 in the left case section 30b via the transmission-side oil pump 80. In addition, a transmission-side pump insertion section 37c in which a left end of the transmission-side pump shaft 81 is inserted is formed in a portion closing the left side of the transmission-side oil pump 80 in the left case section 30b.

Then, the transmission-side pump shaft 81 is coaxially coupled to the crankcase-side pump shaft 85. That is, as shown in FIG. 6, the left end of the transmission-side pump shaft 81 is coupled to the right end of the crankcase-side pump shaft 85. More specifically, an engagement groove of a predetermined length that extends over the transmission-side pump shaft 81 and the crankcase-side pump shaft 85 in the vehicle width direction is formed in a coupling portion between the transmission-side pump shaft 81 and the crankcase-side pump shaft 85. Then, an engaging member 88 in a cylindrical shape that extends over the transmission-side pump shaft 81 and the crankcase-side pump shaft 85 in the vehicle width direction and that engages with the engagement groove is attached to a periphery of this coupling portion. Consequently, the axial center of the crankcase-side pump shaft 85 is oriented to that of the transmission-side pump shaft 81 to constitute a single shaft (hereinafter referred to as a "complex pump shaft 101" ) extending in the vehicle width direction from the crankcase 20 to the transmission case 30. Thus, the crankcase-side shaft pump 85 and transmission-side pump shaft 81 rotate integrally.

This complex pump shaft 101 is formed separately from the crankshaft 40 and the complex main shaft 100, and is disposed parallel to the complex main shaft 100 in a position adjacent to the complex main shaft 100. A left end of the complex pump shaft 101 is supported by the left crankcase-side pump shaft bearing 29c in the crankcase 20. A middle portion of the complex pump shaft 101 is supported by the right pump support section 29a and the left pump support section 29b via the crankcase-side oil pump 82. Furthermore, a right end of the complex pump shaft 101 is supported by the transmission-side pump support section 37 in the transmission case 30 via the transmission-side oil pump 80.

The complex pump shaft 101 rotates in conjunction with the crankshaft 40 regardless of connection or disconnection of driving force transmission by the clutch 50. Consequently, the transmission-side pump shaft 81 attached to the right end of the complex pump shaft 101 can continuously be driven in the disengaged state of the clutch 50 as well as in the engaged state of the clutch 50. Therefore, the transmission-side oil pump 80 is able to supply both an oil for hydraulic control and a lubricating oil to the transmission 60 while the crankshaft 40 is rotating.

The right crankcase-side pump insertion section 29d through which the right end of the crankcase-side pump shaft 85 is inserted and the transmission-side pump insertion section 37c through which the left end of the transmission-side pump shaft 81 is inserted are each formed in shapes which correspond with each other and are fitted to each other. More specifically, in the right crankcase-side pump insertion section 29d, a cylindrical projection projecting to the right from the crankcase 20 is formed around the crankcase-side pump shaft 85. Meanwhile, in the transmission-side pump insertion section 37c, a cylindrical projection, which projects to the left from the left case section 30b, is formed around the transmission-side pump shaft 81. Here, an outer diameter of the cylinder of the right crankcase-side pump insertion section 29d is generally equal to an inner diameter of the cylinder of the transmission-side pump insertion section 37c. Thus, the cylinder of the right crankcase-side pump insertion section 29d is fitted into that of the transmission-side pump insertion section 37c.

Then, the crankcase-side pump shaft 85 and the transmission-side pump shaft 81 are coupled to each other in a portion where the right crankcase-side pump insertion section 29d is fitted into the transmission-side pump insertion section 37c. That is, the coupling portion between the crankcase-side pump shaft 85 and the transmission-side pump shaft 81 in the complex pump shaft 101 is inserted in the fitting portion between the right crankcase-side pump insertion section 29d and the transmission-side pump insertion section 37c.

The above-mentioned coupling between the lower case section 20b and the transmission case 30 is also conducted around the complex pump shaft 101. More specifically, as shown in FIGs. 2 and 3, the above-mentioned plural fastening holes 90 are formed in a surrounding area around the crankcase-side pump shaft 85 in the lower case section 20b and in a surrounding areas around the transmission-side pump shaft 81 in the right case section 30a and the left case section 30b. Then, as shown in FIGs. 4 and 6, the three case sections, which are the lower case section 20b, the left case section 30b, and the right case section 30a, are fastened and secured in the vehicle width direction around the complex pump shaft 101 with the plural bolt members 91.

As shown in FIGs. 2 to 4, 6 and 7, a transmission-side oil pan 38 for storing oil supplied to the transmission 60 by the transmission-side oil pump 80 is formed in the transmission case 30. As shown in FIG. 7, this transmission-side oil pan 38 is provided so as to close an opening 30d from below. The opening 30d is formed at the bottom of the left case section 30b among the three case sections 30a to 30c that constitute the transmission case 30. In other words, the opening 30d of the left case section 30b integrally formed as a case section is closed by the integrally formed transmission-side oil pan 38.

Therefore, sealing between a mating surface 30e around the opening 30d at the lower end of the left case section 30b and a mating surface 38a at the upper end of the transmission-side oil pan 38 can securely and easily be achieved. In the left case section 30b, a through hole 30f is formed in a portion of a wall that divides the transmission chamber 31 from the opening 30d, and a through hole 30g is formed in a portion of a wall that divides the output chamber 32 from the opening 30d. As a result, lubricating oil supplied to the transmission chamber 31 flows down to the transmission-side oil pan 38 from the through hole 30f and lubricating oil supplied to the output chamber 32 flows down to the transmission-side oil pan 38 from the through hole 30g.

As shown in FIGs. 3, 4, and 6, the transmission-side oil pan 38 in the left case section 30b extends rearward from a position below the transmission-side oil pump 80 to the rear end of the left case section 30b on the right of the crankcase-side oil pan 23 and the oil tank 24 in the crankcase 20. Furthermore, as shown in FIGs. 2 and 7, the rear end portion of the transmission-side oil pan 38 below the output shaft 70 extends to the left at the back of the oil tank 24. As described above, the transmission-side oil pan 38 is formed to extend on the right and to the back of the crankcase-side oil pan 23 and the oil tank 24 to secure a sufficient oil storage capacity.

As shown in FIGs. 4, 6, and 7, a control unit 200 for controlling oil supply to the transmission 60 and the output shaft 70 is disposed in the transmission-side oil pan 38. Meanwhile, as shown in FIG. 4, an intake flow passage 37a for sucking oil into the transmission-side oil pump 80 and a discharge flow passage 37b for discharging oil from the transmission-side oil pump 80 are formed in the transmission-side pump support section 37. One end of this intake flow passage 37a is connected to an intake port 80c of the transmission-side oil pump 80, and the other end thereof is connected to the control unit 200. One end of the discharge flow passage 37b is connected to a discharge port 80d of the transmission-side oil pump 80, and the other end thereof is connected to the control unit. In addition, as shown in FIGs. 4 and 7, a strainer 201 for sucking oil into the control unit 200 from the transmission-side oil pan 38 extends downward from the control unit 200. An intake section 201a disposed near the bottom of the transmission-side oil pan 38 for sucking oil therein is formed at a bottom end portion of this strainer 201.

As shown in FIG. 4, 5, and 7, an oil flow passage 39a, an oil flow passage 39b, and an oil flow passage 39c are independently formed in the right case section 30a. One end of the oil flow passage 39a opens to the right end of the right drive pulley shaft bearing 33a while the other end thereof opens to a portion of the left end surface in the lower side portion of the right case section 30a (that is, a mating surface disposed on the dividing surface S2). One end of the oil flow passage 39b opens to the right end of the right driven pulley shaft bearing 34a while the other end thereof opens to another portion of the left end surface in the lower side portion of the right case section 30a. One end of the oil flow passage 39c opens to the right output shaft bearing 35a while the other end thereof opens to further another portion of the left end surface in the lower side portion of the right case section 30a.

Meanwhile, as shown in FIGs. 4 and 7, three oil flow passages 39d to 39f are independently formed from each other in the left case section 30b. One ends of the three oil flow passages 39d to 39f respectively open to positions on the right end surface of the left case section 30b that correspond to the three oil flow passages 39a to 39c formed on the left end surface of the right case section 30a, and the other ends thereof are connected to the control unit 200. As described above, the oil flow passages 39a to 39f are formed across the left case section 30b and the right case section 30a to be connected with the right drive pulley shaft bearing 33a, the right driven pulley shaft bearing 34a, the right output shaft bearing 35a, and the control unit 200 in the transmission case 30.

As shown in FIGs. 5 to 7, hollow sections 62a, 64b, and 70f are respectively formed inside the drive pulley shaft 62, the driven pulley shaft 64, and the output shaft 70 to respectively extend along the axial centers P2, P3, and P4 thereof to open to their right ends. In addition, oil flow passages 62b, 64c, and 70g that respectively extend outward in a radial direction from the hollow sections 62a, 64b, and 70f to open to the peripheries of the drive pulley shaft 62, the driven pulley shaft 64, and the output shaft 70 are formed inside the drive pulley shaft 62, the driven pulley shaft 64, and the output shaft 70. Moreover, oil flow passages 61e, 63e are respectively formed in the drive-side movable sheave 61b and the driven-side movable sheave 63b. The oil flow passage 61e connects the hollow section 62a of the drive pulley shaft 62 with the drive-side oil accommodating section 61c, and the oil flow passage 63e connects the hollow section 64b of the driven pulley shaft 64 with the driven-side oil accommodating section 63c.

Therefore, it is possible to supply oil for hydraulic control to the drive-side oil accommodating section 61c and the driven-side oil accommodating section 63c by driving the transmission-side oil pump 80. More specifically, once the transmission-side oil pump shaft 81 rotates in conjunction with the crankshaft 40, and thus the transmission-side oil pump 80 is driven, oil stored in the transmission-side oil pan 38 flows into the control unit 200 via the strainer 201 and is further drawn into the transmission-side oil pump 80 via the intake flow passage 37a (see FIG. 4). The oil drawn into the transmission-side oil pump 80 is discharged therefrom, flows into the control unit 200 via the discharge flow passage 37b (see FIG. 4), and then further flows into the oil flow passages 39d to 39f formed in the left case section 30b.

At this time, the control unit 200 can independently adjust opening and closing of control valves (not shown) that are respectively provided in connecting portions between the control unit 200 and the oil flow passages 39d to 39f formed in the left case sections 30b. More specifically, for example, the control unit 200 opens the control valve of the oil flow passage 39d that communicates with the drive pulley shaft 62 and closes the control valve of the oil flow passage 39e that communicates with the driven pulley shaft 64 in order to increase the effective diameter of the drive pulley 61. As a result, oil is selectively delivered by pressure from the control unit 200 to the drive-side oil accommodating section 61c of the drive pulley 61 through the oil flow passage 39d in the left case section 30b and the oil flow passage 39a in the right case section 30a. Then, the drive-side movable sheave 61b (see FIGs. 5 and 6) slides to the left to increase the effective diameter of the drive pulley 61.

In addition, oil stored in the transmission-side oil pan 38 is utilized for the purpose of both hydraulic control of the transmission 60 and lubrication of the transmission 60, the output shaft 70, and the coupling shaft 71. That is, in the engine 2, the single transmission-side oil pump 80 supplies oil in the transmission-side oil pan 38 to the transmission 60 for hydraulic control as described above, and also supplies oil in the transmission-side oil pan 38 to the transmission 60, the output shaft 70, and the coupling shaft 71 for lubrication. An oil flow passage (not shown) is formed in the transmission case 30 with its one end opening to both the transmission chamber 31 and the output chamber 32. Thus, lubrication oil delivered by pressure from the transmission-side oil pump 80 can be supplied to the transmission chamber 31 and the output chamber 32 through the oil flow passage.

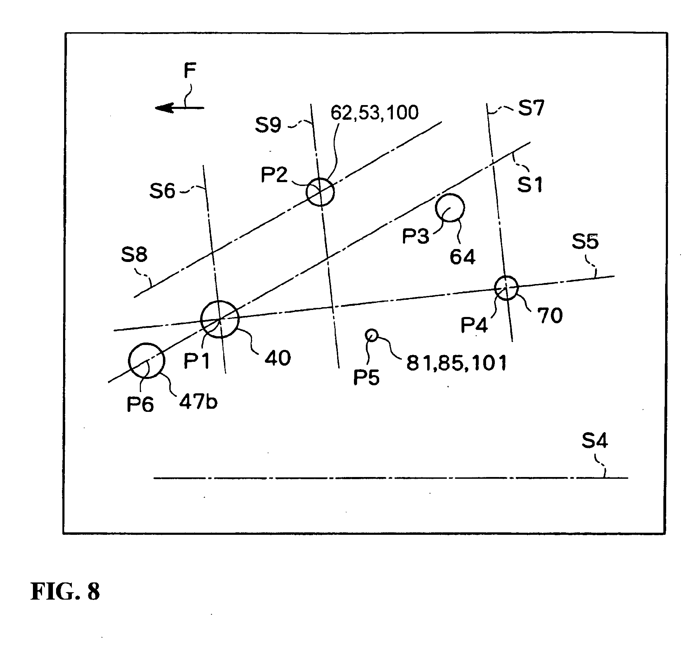

FIG. 8 is an explanatory view for showing relative positions of shafts disposed parallel in the engine case 2a when viewed from the left side of the engine 2. More specifically, FIG. 8 shows a shaft 47b of the balancer 47, the crankshaft 40, the drive pulley shaft 62, the driven pulley shaft 64, the output shaft 70, and the transmission-side pump shaft 81. A direction indicated by an arrow F in FIG. 8 is a front direction of the engine 2.

As described above, because the drive pulley shaft 62 and the clutch shaft 53 are coaxially coupled to constitute the complex main shaft 100 (see FIG. 5), the clutch shaft 53 and the complex main shaft 100 are placed in the same position as the drive pulley shaft 62 in FIG. 8. Also, because the transmission-side pump shaft 81 and the crankcase-side pump shaft 85 are coaxially coupled to constitute the complex pump shaft 101 (see FIG. 6), the crankcase-side pump shaft 85 and the complex pump shaft 101 are placed in the same position as the transmission-side pump shaft 81 in FIG. 8.

Furthermore, FIG. 8 shows: the dividing surface S1 of the crankcase passing through an axial center P6 of the balancer shaft 47b and the axial center P1 of the crankshaft 40; a flat surface (horizontal surface) S4 showing a horizontal direction of the engine 2 when it is mounted on the motorcycle 1; a flat surface S5 passing through the axial center P1 of the crankshaft 40 and the axial center P4 of the output shaft 70; a flat surface S6 that passes through the axial center P1 of the crankshaft 40 and is perpendicular to the flat surface S5; a flat surface S7 that passes through the axial center P4 of the output shaft 70 and is perpendicular to the flat surface S5; a flat surface S8 that passes through the axial center P2 of the drive pulley shaft 62 and is parallel to the dividing surface S1 of the crankcase 20; and a flat surface S9 that passes through the axial center P2 of the drive pulley shaft 62 and is perpendicular to the flat surface S5.

For example, in the engine case 2a shown in FIG. 2, the horizontal surface S4 extends on an extended line of the flat bottomed surfaces of the crankcase-side oil pan 23, the oil tank 24, and the transmission-side oil pan 38. The horizontal surface S4 is also an end surface positioned at the bottom of the engine case 2a.

As described above, the engine 2 includes: the crankshaft 40 driven by reciprocating motion of the pistons (not shown) accommodated in the cylinder section 2b (see FIG. 2); the drive pulley shaft 62 driven by rotation of the crankshaft 40; the driven pulley shaft 64 driven by rotation of the drive pulley shaft 62; the output shaft 70 driven by rotation of the driven pulley shaft 64; and the transmission-side pump shaft 81 driven by rotation of the crankshaft 40. Then, the crankshaft 40, the drive pulley shaft 62, the driven pulley shaft 64, the output shaft 70, and the transmission-side pump shaft 81 are separately formed from each other and are disposed parallel to each other.

As described above, the complex pump shaft 101 composed of the transmission-side pump shaft 81 and the crankcase-side pump shaft 85 is coupled to the clutch upstream section 51 via the intermediate gear 86 as an idler gear. This complex pump shaft 101 may be coupled to a shaft provided upstream of the clutch 50 in terms of driving force transmission via the idler gear.

The crankcase-side oil pump 82 for supplying oil to the crankcase 20 is attached to the complex pump shaft 101 composed of the transmission-side pump shaft 81 and the crankcase-side pump shaft 85.

In addition to the above configuration, in the engine case 2a, the drive pulley shaft 62 and the driven pulley shaft 64 are disposed between the crankshaft 40 and the output shaft 70 and are disposed above the flat surface S5. More specifically, both the axial center P2 of the drive pulley shaft 62 and the axial center P3 of the driven pulley shaft 64 are positioned between the flat surface S6 and the flat surface S7 and are positioned above the flat surface S5.

The transmission-side pump shaft 81 is disposed between the crankshaft 40 and the output shaft 70. More specifically, the axial center P5 of the transmission-side pump shaft 81 is positioned between the flat surface S6 and the flat surface S7.

Furthermore, the transmission-side pump shaft 81 is disposed closer to the flat surface S5 side than the drive pulley shaft 62 and the driven pulley shaft 64. More specifically, the axial center P5 of the transmission-side pump shaft 81 is positioned below the flat surface S5.

However, for instance, the axial center P5 of the transmission-side pump shaft 81 may be positioned above the flat surface S5 and be positioned closer to the flat surface S5 than a flat surface (not shown) that is parallel to the flat surface S5 and passes through one of the axial center P2 of the drive pulley shaft 62 and the axial center P3 of the driven pulley shaft 64.

As described above, the transmission-side pump shaft 81 is disposed in a position surrounded by the crankshaft 40, the drive pulley shaft 62, the driven pulley shaft 64, and the output shaft 70 in a side view of the engine 2 as shown in FIG. 8. Therefore, downsizing of the engine 2 is attained not only in a width direction thereof but also in the longitudinal direction and a vertical direction.

The driven pulley shaft 64 is disposed below the drive pulley shaft 62. More specifically, the axial center P3 of the driven pulley shaft 64 is located below the flat surface S8.

The complex pump shaft 101 including the transmission-side pump shaft 81 is disposed behind the drive pulley shaft 62. More specifically, the axial center P5 of the complex pump shaft 101 is located behind the flat surface S9.

The complex main shaft 100 including the drive pulley shaft 62 is rotatably supported by the upper case section 20a above the dividing surface S1 of the crankcase 20. That is, the axial center P2 of the complex main shaft 100 is positioned above the dividing surface S1.

Furthermore, the complex pump shaft 101 including the transmission-side pump shaft 81 is rotatably supported by the lower case section 20b below the dividing surface S1 of the crankcase 20. That is, the axial center P5 of the complex pump shaft 101 is positioned below the dividing surface S1.

As described above, the engine 2 has two shafts for coupling the crankcase 20 to the transmission case 30, that is, the complex main shaft 100 and the complex pump shaft 101. The complex main shaft 100 is supported so that the axial center P2 thereof is positioned above the dividing surface S1, and the complex pump shaft 101 is supported so that the axial center P5 thereof is positioned below the dividing surface S1. Therefore, in addition to the increased rigidity of the engine case 2a, the length of the engine 2 especially in the width direction and in the longitudinal direction can effectively be decreased.

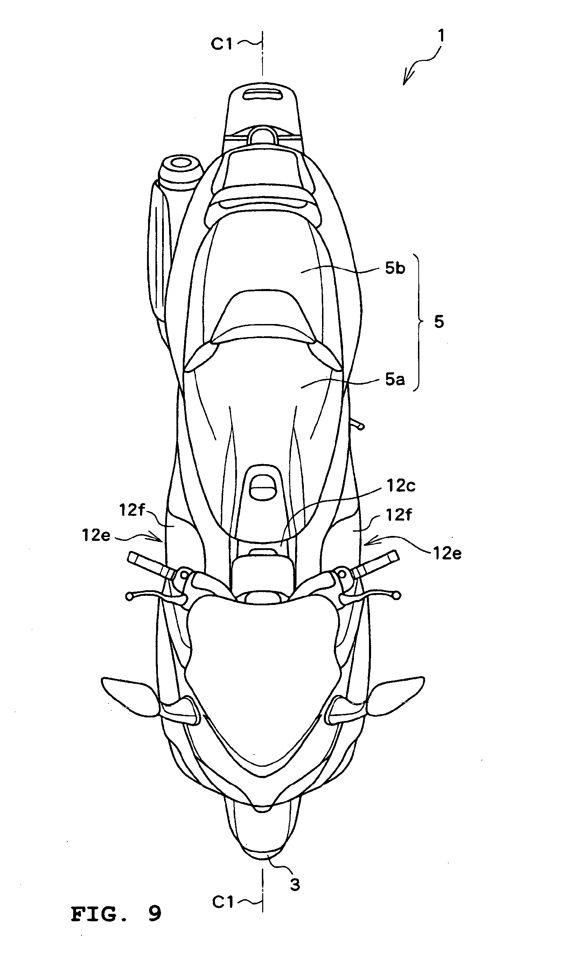

Next, a second aspect of the engine 2 according to this embodiment will be described with reference to FIGs. 9 to 15. In the following description as well as in FIGs. 9 to 15, the same components as ones used in the aforementioned example shown in the FIGs. 1 to 8 are denoted by the same reference numerals, and detailed description thereof will be omitted. In addition, for parts of the components that are the same as ones in the aforementioned example shown in FIGs. 1 to 8, graphical representation and description thereof will be omitted.

FIG. 9 is a plan view of the motorcycle 1. This motorcycle 1 is equipped with the same engine 2 as the one shown in FIG. 1, and, as shown in FIG. 9, is further equipped with the seat 5 having the front seating section 5a and the rear seating section 5b, the center cover 12c extending forward while inclining upward from the position below the front end of the seat 5, a pair of the left and the right footboards 12e having a pair of the left and the right flat surfaces 12f on which the rider seated on the front seating section 5a places his/her left and right feet, for example.

Also, FIG. 9 shows a line (body centerline) C1 indicating the center of the motorcycle 1 in the vehicle width direction. This body centerline C1 is a straight line that passes the center of the front wheel 3 in the vehicle width direction and that of the rear wheel in the vehicle width direction in a state where the front wheel 3 and the rear wheel 4 are linearly disposed so that the motorcycle 1 travels straight.

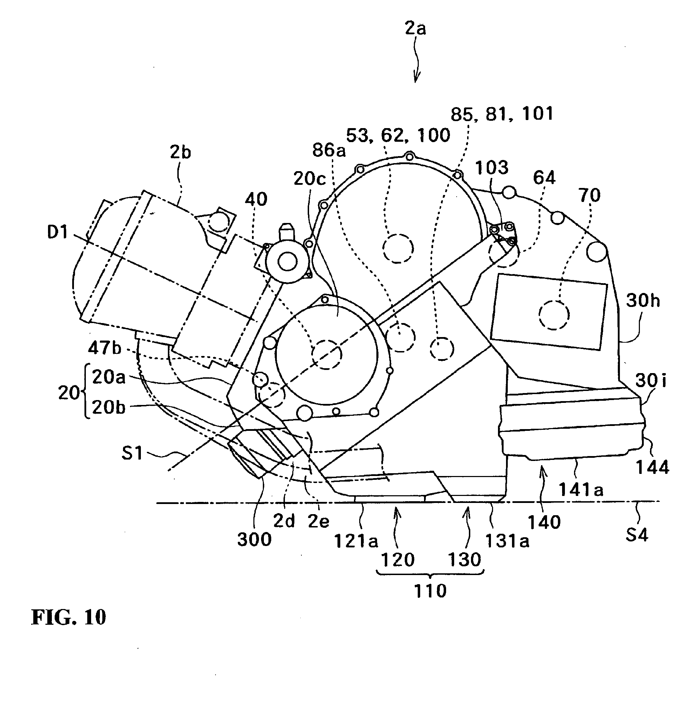

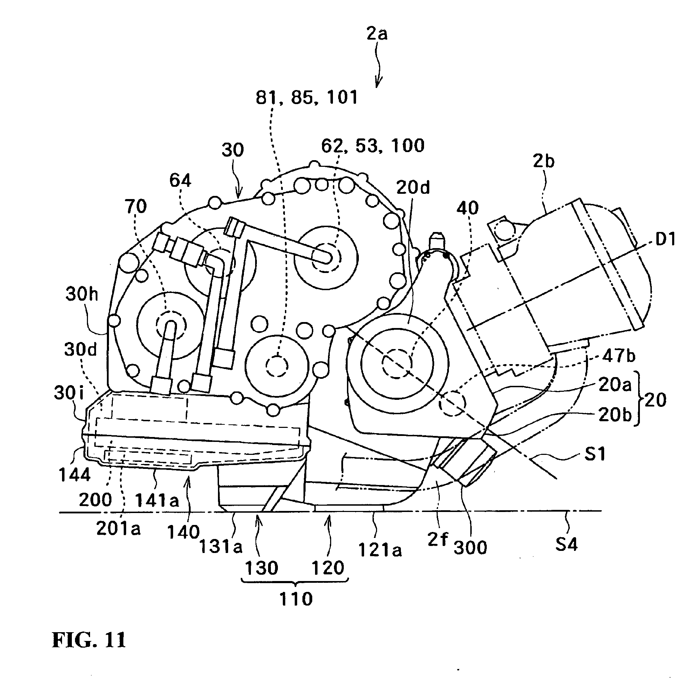

FIG. 10 is a left side view of the engine case 2a. FIG. 11 is a right side view of the engine case 2a. FIGs. 10 and 11 show the engine case 2a in a state that the cover members 20c, 20d of the crankcase 20 for covering the lateral sides of the crankshaft 40 in the vehicle width direction are attached.

As shown in FIG. 10, this engine case 2a includes a bracket 103 that is disposed across the three case sections, which are the upper case section 20a and the lower case section 20b of the crankcase 20 and the left case section 30b of the transmission case 30, and is fastened and secured by bolt members with each of the three case members. The above three case sections are further integrally coupled to each other with this bracket 103; therefore, the rigidity of the engine case 2a as a whole is increased more effectively.

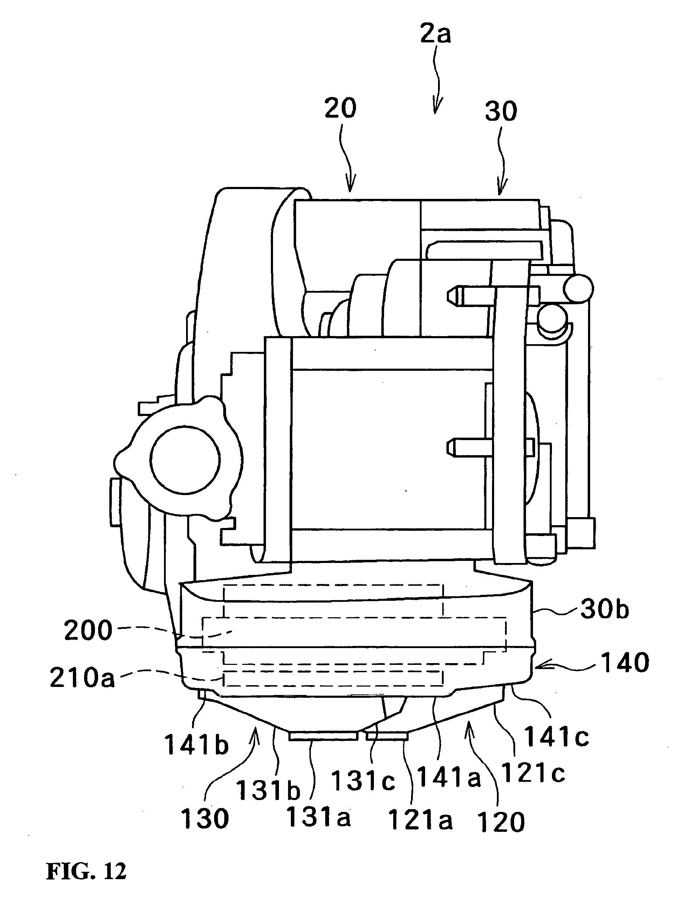

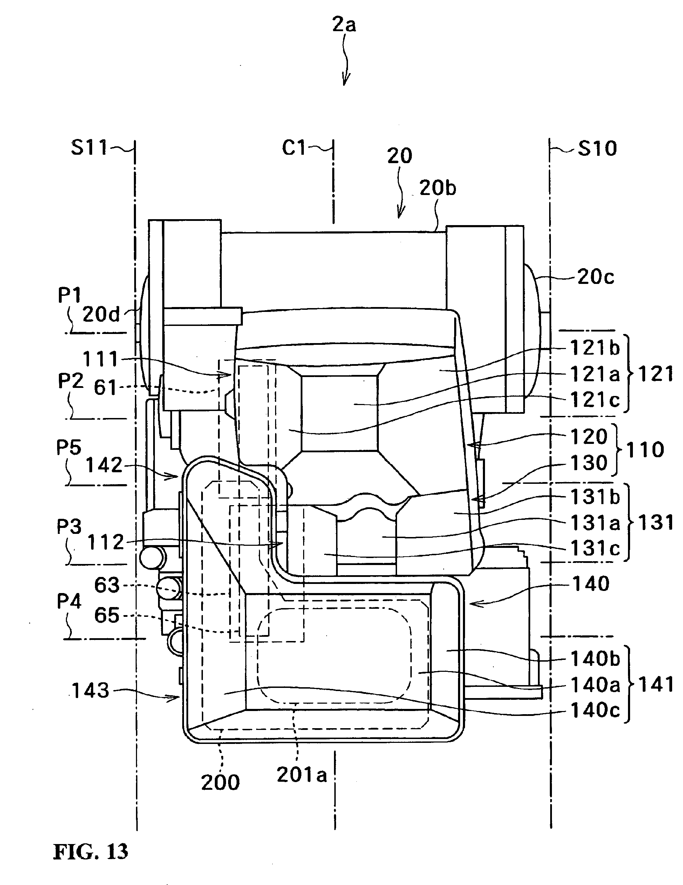

FIG. 12 is a rear view of the engine case 2a. FIG. 13 is a bottom view of the engine case 2a. FIG. 13 shows the axial center P1 of the crankshaft 40, the axial center P2 of the drive pulley shaft 62, the axial center P3 of the driven pulley shaft 64, the axial center P4 of the output shaft 70, and the axial center P5 of the transmission-side pump shaft 81 in a case that the engine case 2a is viewed from below.

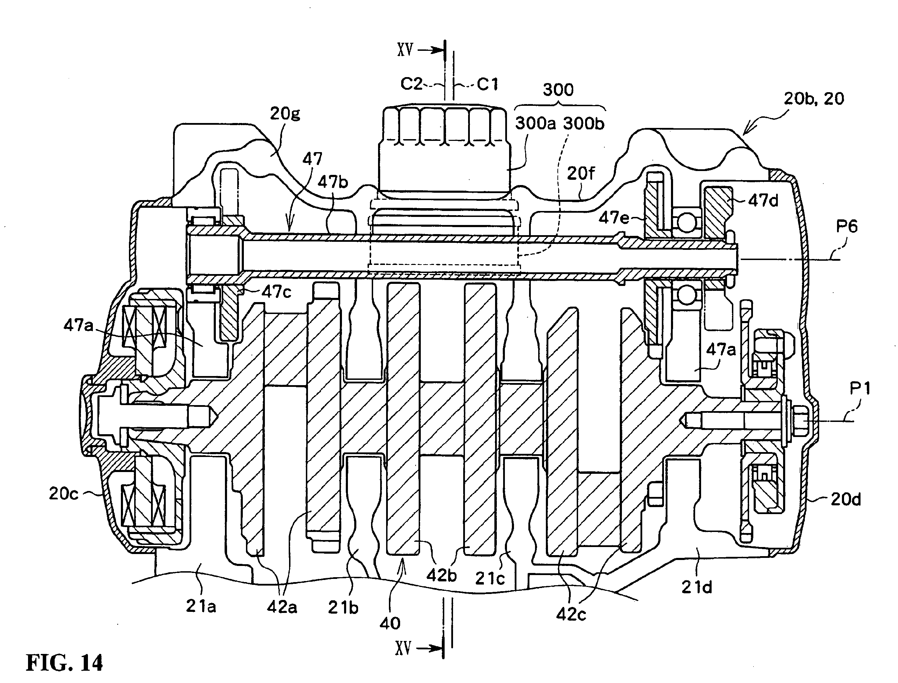

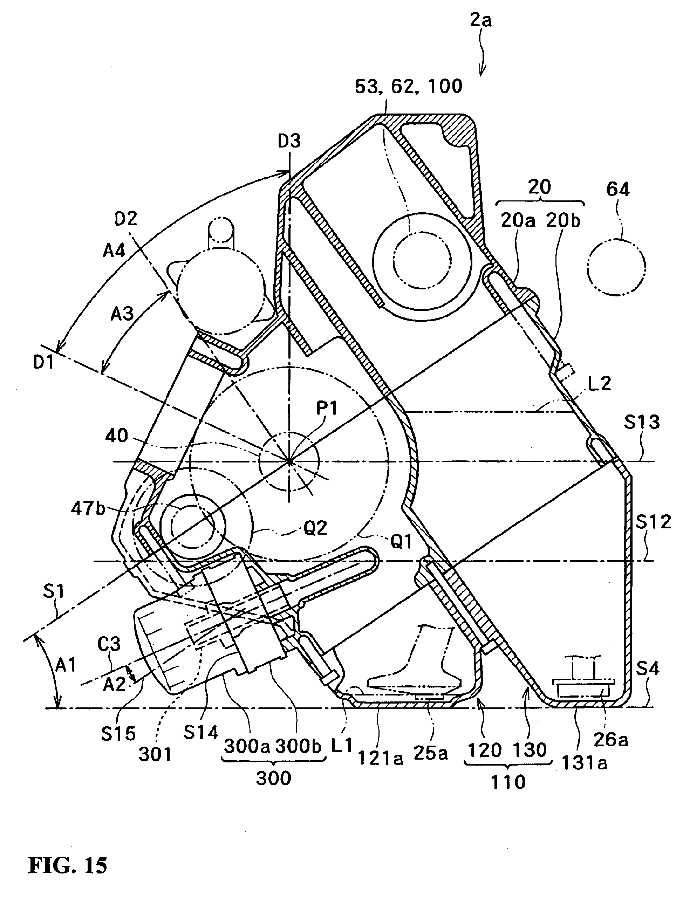

FIG. 14 is a sectional view of the engine 2 that is cut off along the dividing surface S1 of the crankcase 20 and is seen from above the dividing surface S1. FIG. 15 is a sectional view of the engine case 2a taken along the line XV-XV (that is, an engine centerline C2) shown in FIG. 14. FIG. 14 shows a line (engine centerline) C2 indicating the center of the engine in the vehicle width direction. The engine centerline C2 is a line that passes through a central point of a middle pair of the webs 42b and is perpendicular to the axial center P1 of the crankshaft 40 in a direction along the axial center P1 (that is, a longitudinal direction of the crankshaft 40). In addition, this engine centerline C2 is parallel to the body centerline C1 shown in FIG. 9 and is positioned slightly away from the body centerline C1 in the vehicle width direction. FIG. 14 exposes a mating surface 20g on which the lower case section 20b of the crankcase 20 is joined with the upper case section 20a.

As with the above-mentioned example, the engine 2 according to the second aspect includes the transmission 60 having the drive pulley 61 and the driven pulley 63 with the metal V belt 65 being wound therebetween (see FIG. 5), and also includes the crankshaft 40, the drive pulley shaft 62, the driven pulley shaft 64, the output shaft 70, and the transmission-side pump shaft 81 that are aligned parallel with each other as shown in FIGs. 10 and 11.

The drive pulley shaft 62 and the clutch shaft 53 are coaxially coupled to constitute the complex main shaft 100, and the transmission-side pump shaft 81 and the crankcase-side pump shaft 85 are coaxially coupled to constitute the complex pump shaft 101. Also, FIG. 10 shows a shaft 86a of the intermediate gear 86 (see FIG. 6) that couples the crankshaft 40 to the complex pump shaft 101.

As shown in FIGs. 10 to 13 and 15, the engine 2 is equipped with a crankcase oil pan 110, which receives oil supplied to the crankshaft 40, and a transmission oil pan 140, which receives oil supplied to the transmission 60.

The crankcase oil pan 110 and the transmission oil pan 140 are separately formed from each other. More specifically, the crankcase oil pan 110 is provided so as to seal an opening (not shown) formed at the bottom of the lower case section 20b of the crankcase 20 from below. Meanwhile, the transmission oil pan 140 is provided so as to seal the opening 30d (see FIG. 11) formed at the bottom of the left case section 30b of the transmission case 30 from below.

The crankcase oil pan 110 has a crankcase-side oil pan 120 and an oil tank 130. The crankcase-side oil pan 120 is formed in a portion of the bottom section of the crankcase 20 below the crank chamber 21 and stores lubricating oil in a same manner as the crankcase-side oil pan 23 in the above-mentioned example. Lubricating oil flows down by gravitation from the crank chamber 21 and the clutch chamber 22 in the crankcase 20 into the crankcase-side oil pan 120.

The crankcase-side oil pan 120 has a bottom surface 121 including a middle bottom surface 121a, a left bottom surface 121b, and a right bottom surface 121c. The middle bottom surface 121a is disposed undermost in the crankcase-side oil pan 120 and extends flatly along the horizontal surface S4. The intake section 25a (see FIG. 15) of the strainer 25 disposed in the crankcase-side oil pan 120 is disposed above the middle bottom surface 121a.

Both the left bottom surface 121b and the right bottom surface 121c are formed to be located upward as they move away from the vehicle centerline C1 in the vehicle width direction to the lateral sides (that is, the lateral sides in the vehicle width direction). In other words, the left bottom surface 121b is formed to incline upward to the left from a left end of the middle bottom surface 121a, and the right bottom surface 121c is formed to incline upward to the right from a right end of the middle bottom surface 121a. In addition, in the bottom surface 121, a portion in front of and a portion in the rear of the middle bottom surface 121a are respectively formed to incline upward to the front and to the rear from a front end of and a rear end of the middle bottom surface 121a.

The oil tank 130 is formed in another portion of the bottom section of the crankcase 20 (a portion at the back of the crankcase-side oil pan 120) that is adjacent to the crankcase-side oil pan 120 below the clutch chamber 22 and stores lubricating oil transferred from the crankcase-side oil pan 120 in a same manner as the oil tank 24 in the above-mentioned example.

The oil tank 130 has a bottom surface 131 including a middle bottom surface 131a, a left bottom surface 131b, and a right bottom surface 131c. The middle bottom surface 131a is disposed undermost in the oil tank 130 and extends flatly along the horizontal surface S4. The intake section 26a (see FIG. 15) of the strainer 26 disposed in the oil tank 130 is placed above the middle bottom surface 131a.

Both the left bottom surface 131b and the right bottom surface 131c are formed to be located upward as they move away from the vehicle centerline C1 in the vehicle width direction to the lateral sides (that is, the lateral sides in the vehicle width direction). More specifically, the left bottom surface 131b is formed to incline upward to the left from a left end of the middle bottom surface 131a, and the right bottom surface 131c is formed to incline upward to the right from a right end of the middle bottom surface 131a. In addition, in the bottom surface 131, a portion in front of and a portion in the rear of the middle bottom surface 131a are respectively formed to incline upward to the front and to the rear from a front end of and a rear end of the middle bottom surface 131a.

The transmission oil pan 140 stores oil supplied to the transmission 60 by the transmission-side oil pump 80 in the same manner as the transmission-side oil pan 38 in the above-mentioned example. The transmission oil pan 140 has a bottom surface 141 including a middle bottom surface 141a, a left bottom surface 141b, and a right bottom surface 141c. The middle bottom surface 141a is disposed undermost in the transmission oil pan 140 and extends flatly above the undermost surface among the bottom surfaces of the crankcase oil pan 110 (that is, the middle bottom surface 121a of the crankcase-side oil pan 120 and the middle bottom surface 131a of the oil tank 130). The intake section 201a of the strainer 201 disposed in the transmission oil pan 140 is disposed above the middle bottom surface 141a (see FIGs. 11 to 13).

As shown in FIGs. 10, 11, and 15, the horizontal surface S4 extends along the middle bottom surface 121a of the crankcase-side oil pan 120 and the middle bottom surface 131a of the oil tank 130 as the undermost surfaces of the engine case 2a on an extended line of these bottom surfaces.

Both the left bottom surface 141b and the right bottom surface 141c are formed to be located upward as they move away from the vehicle centerline C1 in the vehicle width direction to the lateral sides (that is, the lateral sides in the vehicle width direction). More specifically, the left bottom surface 141b is formed to incline upward to the left from a left end of the middle bottom surface 141a, and the right bottom surface 141c is formed to incline upward to the right from a right end of the middle bottom surface 141a. In addition, in the bottom surface 141, a portion in front of and a portion in the rear of the middle bottom surface 141a are respectively formed to incline upward to the front and to the rear from a front end of and a rear end of the middle bottom surface 141a.

The transmission oil pan 140 is formed in an L-shape having a first section 142, which is disposed on the right side with respect to the body centerline C1 along the metal belt 65, and a second section 143 extending from a portion of the first section 142 in the driven pulley 63 side to the left side with respect to the body centerline C1.

In other words, as shown in FIG. 13, the drive pulley 61, the driven pulley 63, and the metal belt 65 wound between the drive pulley 61 and the driven pulley 63 are all disposed on the right side with respect to the vehicle centerline C1. Then, in the transmission oil pan 140, the first section 142 extending in the longitudinal direction is disposed along the metal belt 65 on the right side with respect to the body centerline C1.

The second section 143 is disposed across the body centerline C1. In other words, the second section 143 extends in the vehicle width direction from a rear portion of the first section 142 and is disposed from the right side to the left side with respect to the body centerline C1. More specifically, the second section 143 is disposed along the output shaft 70 below the output shaft 70.

As in the above-described example, the control unit 200 for controlling the oil supply to the transmission 60 and to the output shaft 70 is disposed inside the transmission oil pan 140. The control unit 200 includes a valve mechanism for controlling pressure that is necessary to supply oil stored in the transmission oil pan 140 to the transmission 60.

As shown in FIG. 13, this control unit 200 is formed in an L-shape that corresponds to the L-shape of the transmission oil pan 140. More specifically, a portion of the control unit 200 is formed to extend in the longitudinal direction within the first section 142 of the transmission oil pan 140, and the other portion of the control unit 200 is formed to extend in the vehicle width direction within the second section 143.

Meanwhile, the crankcase oil pan 110 is formed in an L-shape having: a third section 111 (a front portion of the crankcase-side oil pan 120) that is disposed along the longitudinal direction of the crankshaft 40; and a fourth section 112 (a rear portion of the crankcase-side oil pan 120 and the oil tank 130) that is disposed in a position next to the first section 142 of the transmission oil pan 140 in the vehicle width direction.

That is, the third section 111 is composed of a portion located in front of the rear end of the middle bottom surface 121a of the crankcase-side oil pan 120. This third section 111 extends in the vehicle width direction from the left side to the right side with respect to the body centerline C1 in front of the first section 142 and the second section 143 of the transmission oil pan 140.

The fourth section 112 is composed of a portion positioned in the rear of the rear end of the middle bottom surface 121a in the crankcase-side oil pan 120 and the oil tank 130. This fourth section 112 extends in the vehicle width direction from the left side to the right side with respect to the body centerline C1 in the left side of the first section 142 and in front of the second section 143 of the transmission oil pan 140.

That is, the crankcase-side oil pan 120 itself is formed in the L-shape, and the crankcase oil pan 110 composed of the crankcase-side oil pan 120 and the oil tank 130 that are adjacent to each other is also formed in the L-shape as a whole.

As described above, a portion of the crankcase oil pan 110 and a portion of the transmission oil pan 140 are disposed parallel to each other respectively in the crankshaft 40 side and in the drive pulley shaft 62 side. More specifically, the entire crankcase oil pan 110 and the second section 143 of the transmission oil pan 140 are disposed parallel to each other in the longitudinal direction, respectively on the crankshaft 40 side and on the drive pulley shaft 62 side.

Then, the crankcase oil pan 110 and the transmission oil pan 140 are each formed in the L-shape that corresponds to the other. In other words, as shown in FIG. 13, the crankcase oil pan 110 and the transmission oil pan 140 are each formed in the L-shape that engage with each other below the engine case 2a. More specifically, the fourth section 112 of the crankcase oil pan 110 and the first section 142 of the transmission oil pan 140 are disposed to overlap each other in the vehicle width direction. Therefore, capacities of both the crankcase oil pan 110 and the transmission oil pan 140 can effectively be secured in a limited space.

As described above, the left end of the crankshaft 40 is covered with the cover member 20c that is disposed on the left side surface of the crankcase 20, and the right end of the crankshaft 40 is covered with the cover member 20d that is disposed on the right side surface of the crankcase 20 (see FIG. 5). The length of the crankcase oil pan 110 in the vehicle width direction and the length of the transmission oil pan 140 in the vehicle width direction are both within a range of length between a surface S10 that passes by the left end of the left cover member 20c of the crankcase 20 in the vehicle width direction and is perpendicular to the axial center P1 of the crankshaft 40 and a surface S11 that passes by the right end of the right cover member 20d of the crankcase 20 in the vehicle width direction and is perpendicular to the axial center P1 of the crankshaft 40. In other words, both the width of the crankcase oil pan 110 (the length between the left end of the crankcase oil pan 110 to the right end thereof) and the width of the transmission oil pan 140 (the length between the left end of the transmission oil pan 140 and the right end thereof) are within a range of the width of the engine case 2a.

The transmission oil pan 140 is disposed under the transmission case 30. A rear end 144 of the transmission oil pan 140 is located more rearward than a rear end 30h of a portion in the transmission case 30 that covers the rear of the driven pulley 63. Also, as described above, the transmission case 30 is composed of the three case sections 30a, 30b, 30c that can be divided into each section by the dividing surfaces S2, S3 (see FIG. 5) that are perpendicular to the axial center P2 of the drive pulley shaft 62. Then, as shown in FIG. 11, the transmission oil pan 140 is provided to close the opening 30d from below, and the opening 30d is formed below the bottom of the left case section 30b among the three case sections 30a, 30b, 30c that constitute the transmission case 30.

Here, as shown in FIGs. 10 and 11, a lower end portion 30i of the left case section 30b is formed to project to the rear so that a rear end thereof is positioned more rearward than the rear end 30h of a portion that covers the rear of the driven pulley 63. Then, the transmission oil pan 140 is provided so as to seal the lower end portion 30i of the left case section 30b, which projects to the rear, from below. As a result, the rear end 144 of the transmission oil pan 140 is disposed more rearward than the rear end 30h of a portion in the transmission case 30 that covers the rear of the driven pulley 63.

The width of the transmission oil pan 140 in the longitudinal direction of the crankshaft 40 is longer than the width of the crankcase oil pan 110 in the longitudinal direction of the crankshaft 40. In addition, the bottom surface 141 of the transmission oil pan 140 is located higher than the bottom surface of the crankcase oil pan 110 (that is, the bottom surface 121 of the crankcase-side oil pan 120 and the bottom surface 131 of the oil tank 130). Meanwhile, the engine 2 is a multi-cylinder engine having three cylinders, and three exhaust pipes 2d, 2e, 2f come out of the cylinder section 2b. More specifically, as shown in FIGs. 10 and 11, each of the three exhaust pipes 2d, 2e, 2f extends downward and rearward from a front lateral surface of the cylinder unit 2b.

Then, as shown in FIG. 10, the two left exhaust pipes 2d, 2e extend rearward on the left side of the crankcase 20, and as shown in FIG. 11, the right exhaust pipe 2f extends rearward on the right side of the crankcase 20.

In the engine 2, the two left exhaust pipes 2d, 2e can be disposed on the left side of the crankcase oil pan 110 whose width is reduced, and the right exhaust pipe 2f can be disposed on the right side of the crankcase oil pan 110. Furthermore, in the engine 2, these three exhaust pipes 2d, 2e, 2f may be disposed all together under the transmission oil pan 140 whose height is reduced.

As shown in FIGs. 14 and 15, the engine 2 includes an oil unit 300 having an oil filter 300a for filtering oil and an oil cooler 300b for cooling oil in the front end portion of the crankcase 20. It is preferable that the oil unit 300 be disposed in the front side of the vehicle body while being exposed to the outside as described above from a standpoint of maintainability of the oil unit 300 and cooling capability of the oil cooler 300b.

The oil filter 300a and the oil cooler 300b are each formed as a cylindrical member. A circular end surface in a rear side of the oil filter 300a is joined with a circular end surface in a front side of the oil cooler 300b. Then, they are coupled to each other to constitute the integrated oil unit 300.

An oil flow passage member 301 is inserted in this oil unit 300. A hollow portion formed inside this oil flow passage member 301 forms the same oil flow passage 28b as the one shown in FIG. 2.

The oil unit 300 is disposed to be positioned as upward and rearward as possible. More specifically, as shown in FIG. 14, a central portion 20f in the front end portion of the crankcase 20 in a direction along the axial center P1 of the crankshaft 40 is formed to be dented rearward.

Then, the oil unit 300 is provided to project forward from the central portion 20f, which is dented rearward, in the crankcase 20. That is, the oil unit 300 is disposed in front of the central cylinder in the vehicle width direction among the three cylinders included in the engine 2. More specifically, as shown in FIG. 14, the oil unit 300 is disposed in front of the pair of the crank webs 42b, which is provided in the center in a direction along the axial center P1 of the crankshaft 40, among the three pairs of the crank webs 42a, 42b, 42c provided in the crankshaft 40.

If the engine 2 is a multi-cylinder engine with three or more cylinders, the position of the oil unit 300 in the longitudinal direction of this crankshaft 40 is not limited in a range of a cylinder placed in the center in the longitudinal direction thereof. For example, it can also be placed within a range of one or more cylinders except one placed on both ends.

As shown in FIG. 14, the engine 2 includes the balancer 47 in front of the crankshaft 40. More specifically, as shown in FIG. 8, this balancer 47 is disposed parallel to the crankshaft 40 in front of the crankshaft 40 in a manner that the axial center P6 of the shaft 47b thereof is positioned on the dividing surface S1 of the crankcase 20.

The balancer shaft 47b is rotatably supported by the crankcase 20. More specifically, as shown in FIG. 14, a left end portion of the balancer shaft 47b is supported by a shaft support section 47a in the left side of the crankcase 20 via a needle bearing. A right end portion thereof is supported by the shaft support section 47a in the right side of the crankcase 20 via a ball bearing.

The balancer 47 has a pair of left and right balancer weights 47c, 47d provided on both ends of the balancer shaft 47b. More specifically, as shown in FIG. 14, the left balancer weight 47c is provided on the right side of the left shaft support section 47a, and the right balancer weight 47d is provided on the right side of the right shaft support section 47a.

On the balancer shaft 47b, a gear 47e for driving the balancer shaft 47b in conjunction with the crankshaft 40 is provided in a position adjacent to the left side of the right balancer weight 47d via the right shaft support section 47a. This gear 47e meshes with a gear formed on the periphery of the right crank web 42c in the right pair 42c of the crank webs of the crankshaft 40. The balancer shaft 47b is coupled to the crankshaft 40 via the gear 47e and is driven by the rotation of the crankshaft 40.

The left balancer weight 47c and the right balancer weight 47d are respectively disposed on the left side and the right side of the oil unit 300. In other words, as shown in FIG. 14, the left balancer weight 47c and the right balancer weight 47d are respectively disposed on the left side and the right side of the central portion 20f of the crankcase 20.

The oil cooler 300b as the rear portion of the oil unit 300, the left balancer weight 47c, and the right balancer weight 47d are linearly disposed to overlap each other in the longitudinal direction of the crankshaft 40. With such a configuration, in the engine 2, the oil unit 300 can be disposed below and at least partially behind the crankshaft 40 while the balancer 47 is provided in front of the crankshaft 40.

As shown in FIG. 15, this oil unit 300 extends forward while inclining downward. Meanwhile, the dividing surface S1 of the crankcase 20 also extends forward while inclining downward. An angle A1 formed by this dividing surface S1 and the horizontal surface S4 is kept in a predetermined range of 25 degrees to 45 degrees, for example.

On the contrary, a line that passes through the center of an attachment surface S14, on which the oil filter 300a is attached to the oil cooler 300b, and is perpendicular to the attaching surface S14 (that is, a centerline C3 of the oil unit 300) extends forward while inclining to be close to the dividing surface S1 of the crankcase 20. More specifically, an angle A2 formed by this oil unit centerline C3 and a flat surface 15 that passes through the center of the attachment surface S14 and is parallel to the dividing surface S1 can be set to approximately 10 degrees.

As a result, as shown in FIG. 15, the oil unit 300 is disposed in a manner that the lower end thereof is located higher than the lower end of the crankcase oil pan 110 (that is, the horizontal surface S4 shown in FIG. 15). As described above, the oil unit 300 can be disposed in a position in the proximity of the crankshaft 40 in the engine 2.

In the engine 2, the cylinder section 2b is provided so as to incline forward with respect to the dividing surface S1 of the crankcase 20. In other words, as shown in FIG. 15, a line (cylinder centerline) D1 along a longitudinal direction of the cylinder section 2b (a direction in which the pistons reciprocate) inclines more forward than a line D2 that is perpendicular to the dividing surface S1 of the crankcase 20. More specifically, an angle A3 formed by this cylinder centerline D1 and the perpendicular line D2 can be equal to or larger than 25 degrees. As a result, an angle A4 formed by the cylinder centerline D1 and a line D3 that is perpendicular to the horizontal surface S4 can be equal to or larger than 60 degrees in the engine 2.

As shown in FIG. 15, the balancer shaft 47b is disposed above a horizontal surface S12 that passes a lower end of a range Q1 of the crankshaft 40 including the crank webs 42. Furthermore, a range Q2 of the pair of the left and the right balancer weights 47c, 47d is disposed below a horizontal surface S13 passing the axial center P1 of the crankshaft 40.

It is possible in the engine 2 to effectively reduce its overall vertical length with such a configuration by: providing the crankcase 20 whose dividing surface S1 inclines; controlling the height of the cylinder section 2b while disposing the balancer shaft 47b in front of the crankcase 40 on the dividing surface S1; and disposing the oil unit 300 above the lower end of the crankcase oil pan 110.

As shown in FIG. 15, clearance between a level surface L1 of oil stored in the crankcase-side oil pan 120 and the balancer 47 is sufficiently secured in the engine 2. Therefore, it is possible to effectively reduce loss of driving force by preventing the balancer weights 47c, 47d from being soaked in the oil in the crankcase-side oil pan 120. FIG. 15 also shows an oil level surface L2 in the oil tank 130.

In the engine 2, the crankshaft 40, the complex main shaft 100, the driven pulley shaft 64, the output shaft 70, and the complex pump shaft 101 are separately formed from each other and are disposed parallel to each other. Therefore, it is possible to shorten the length of the engine 2 in the vehicle width direction and thus to downsize the engine 2.

The engine according to the present invention may be an engine equipped with one or more cylinders. However, it is preferable that the engine according to the invention be one with plural in-line cylinders and is further preferable that the engine be one with three or more in-line cylinders. Also, the transmission-side oil pump 80 and the crankcase-side oil pump 80 (scavenge pump 83, feed pump 84) are not limited to trochoid pumps, and at least partially, they can be another type of oil pumps.

As described above, a compact engine can be realized with the invention. Therefore, the engine according to the invention is suitable for a straddle-type vehicle with a limited space for mounting an engine, such as a motorcycle.

As described above, the engine 2 includes: the crankshaft 40; the transmission 60 having the drive pulley 61 and the driven pulley 63; a first oil pan (crankcase oil pan 110) for receiving oil supplied to the crankshaft 40; and a second oil pan (transmission oil pan 140) that receives oil supplied to the transmission 60 and is formed separately from the first oil pan (crankcase oil pan 110). The crankshaft 40 extends in the vehicle width direction of the straddle-type vehicle (motorcycle 1) on which the engine 2 is mounted. The drive pulley shaft 62 for driving the drive pulley 61 is disposed parallel to the crankshaft 40. At least a portion of the first oil pan (crankcase oil pan 110) and at least a portion of the second oil pan (transmission oil pan 140) are respectively disposed in parallel with the crankshaft 40 and the drive pulley shaft 62. The second oil pan (transmission oil pan 140) has a section (first section 142 of the transmission oil pan 140) extending across the center C1 in the vehicle width direction. Thereby, it is possible to suppress the enlargement of the engine 2 in the vehicle width direction and to secure the sufficient capacity of the second oil pan (transmission oil pan 140). That is, the width of the engine 2 is reduced by disposing the crankshaft 40 in parallel with the drive pulley shaft 62. In addition, because the second oil pan (transmission oil pan 140) has the section extending across the center in the vehicle width direction, downsizing of the engine 2 and securing of the capacity of the second transmission oil pan (transmission oil pan 140) are simultaneously achieved.

In the engine 2, a belt (metal belt 65) wound between the drive pulley 61 and the driven pulley 63 is disposed on one side with respect to the center in the vehicle width direction. The second oil pan (transmission oil pan 140) is formed in an L shape having the first section 142 disposed on one side with respect to the center in the vehicle width direction along the belt (metal belt 65) and the second section 143 that extends from a portion of the first section 142 in the driven pulley 63 side to the other side with respect to the center in the vehicle width direction. Thereby, downsizing of the engine 2 and securing of the capacity of the second oil pan (transmission oil pan 140) are simultaneously achieved. Furthermore, it is possible to secure a space for disposing other parts of the engine 2 and components other than the engine 2 in the straddle-type vehicle (motorcycle 1). Here, in terms of the position of the transmission 60, it is acceptable as long as the belt (metal belt 65) is disposed on one side with respect to the center in the vehicle width direction. Also, at least either the drive pulley 61 or the driven pulley 63 may be disposed on one side in addition to the belt (metal belt 65). Furthermore, the belt (metal belt 65), the drive pulley 61, and the driven pulley 63 may all be disposed on one side. For example, when the drive pulley shaft 62 is disposed parallel to the crankshaft 40, and when the entire drive pulley 61 is disposed on one side with respect to the vehicle width direction, it is possible to dispose components of the driveline such as gears (gear 51b of the clutch upstream section 51, the gear 42g of the crankshaft 40) for transmitting driving force from the crankshaft 40 to the drive pulley shaft 62, chains, and the like on the other side with respect to the vehicle width direction. Therefore, it is possible to effectively reduce the width of the engine 2 and thus to downsize the engine 2. In addition, for instance, when the drive pulley 61, the driven pulley 63, and the belt (metal belt 65) are all disposed on one side with respect to the center in the vehicle width direction, it is possible to dispose components of the driveline for transmitting driving force from the crankshaft 40 to the drive pulley shaft 62 such as the gears (the gear 51b of the clutch upstream section 51, the gear 42g of the crankshaft 40), chains, and the like as well as components of the driveline (output shaft left section 70b, coupling shaft 71) for transmitting driving force to the downstream side of the driven pulley 63 in the driving force transmission passage on the other side with respect to the vehicle width direction. Therefore, it is possible to effectively reduce the width of the engine 2 and thus to downsize the engine 2.

Meanwhile, the first oil pan (crankcase oil pan 110) is formed in an L shape having: a third section (a portion of the crankcase-side oil pan 120) that is disposed along the longitudinal direction of the crankshaft 40; and a fourth section (another portion of the crankcase-side oil pan 120 and the oil tank 130) that is disposed in a position adjacent to the first section 142 of the second oil pan in the vehicle width direction. Thereby, it is possible to effectively dispose the first oil pan (crankcase oil pan 110) and the second oil pan (transmission oil pan 140) in a limited space, and thus to secure sufficient capacities of both of the oil pans.

In the engine 2, the bottom surface 141 of the second oil pan (the transmission oil pan 140) has portions (the left bottom surface 141b and the right bottom surface 141c) formed to extend upward as they move away from the center in the vehicle width direction to the lateral sides. Thereby, for example, when the engine 2 is adopted in a straddle-type vehicle (motorcycle 1 or some of straddle-type four-wheeled vehicles), whose body is tilted when being driven or at a stop, the bank angle can sufficiently be secured. That is, even when the vehicle body is tilted, contact of the bottom surface 141 of the second oil pan (transmission oil pan 140) with a road surface can effectively be avoided. In addition, even when the engine 2 is adopted for a straddle-type vehicle that is not banked while in use, the components (the exhaust pipes 2d, 2e, 2f and the body frame that constitutes the framework of the body) extending in the longitudinal direction of the body can be disposed in the proximity of the bottom surface 141 of the second oil pan (transmission oil pan 140). Therefore, it is possible to effectively avoid an increase in the length of a portion of the body in the vertical direction due to arrangement of the components. The portions (the left bottom surface 141b and the right bottom surface 141c) in the bottom surface 141 (of the transmission oil pan 140) that are formed to extend upward as they extend away from the center in the vehicle width direction to the lateral sides can be formed to be inclined as they extend away from the center in the vehicle width direction to the lateral sides. However, as far as the bank angle can be secured, the shape thereof is not limited to the above. For example, they can be in a stair-shape in which they are gradually stepped upward as they extend away from the center in the vehicle width direction to the lateral sides.

In the engine 2, one end and the other end of the crankshaft 40 in the longitudinal direction are covered with the case (crankcase 20). The lengths of the first oil pan (crankcase oil pan 110) and the second oil pan (transmission oil pan 140) in the vehicle width direction are within a range of length W0 between the surface S10, which passes by one end (lateral end of the cover member 20c in the vehicle width direction) of the case (crankcase 20) and is perpendicular to the axial center P1 of the crankshaft 40, and the surface S11, which passes by the other end (lateral end of the cover member 20d in the vehicle width direction) of the case (crankcase 20) and is perpendicular to the axial center P1 of the crankcase 40. Therefore, both the width W1 of the first oil pan (crankcase oil pan 110) and the width W2 of the second oil pan (transmission oil pan 140) can be within a range of the width W0 of the case (engine case 2a) that constitutes the framework of the engine 2. Consequently, it is possible to effectively reduce the width of the engine 2.

In the engine 2, the transmission case 30 for accommodating the transmission 60 is further provided. The second oil pan (transmission oil pan 140) is disposed below the transmission case 30. The rear end 144 of the second oil pan (transmission oil pan 140) is disposed further rearward than the rear end 30h of the portion of the transmission case 30 that covers the rear of the driven pulley 63. Therefore, it is possible to effectively secure the capacity of the second transmission oil pan (transmission oil pan 140).

In the engine 2, a plurality of cylinders are provided. The width W2 of the second oil pan (transmission oil pan 140) in the longitudinal direction of the crankshaft 40 is larger than the width W1 of the first oil pan (crankcase oil pan 110) in the longitudinal direction. The bottom surface 141 of the second oil pan (transmission oil pan 140) is disposed higher than the bottom surface (the bottom surface 121 of the crankcase-side oil pan 120 and the bottom surface 131 of the oil tank 130) of the first oil pan (crankcase oil pan 110). Therefore, it is possible to secure the height of the first oil pan (the crankcase oil pan 110) while reducing the width W1 thereof, and to secure the width W2 of the second oil pan (the transmission oil pan 140) while reducing the height thereof. Consequently, the capacities of both of the oil pans can effectively be secured. In addition to the above, because the plurality of the exhaust pipes 2d, 2e, 2f that extend from the plurality of the cylinders can be disposed in a lateral side of the first oil pan (crankcase oil pan 110) and below the second oil pan (transmission oil pan 140), the engine 2 can be compact enough for the straddle-type vehicle (motorcycle 1) with limited width and height. More specifically, some (exhaust pipes 2d, 2e) of the plural exhaust pipes 2d, 2e, 2f extending rearward on the outside the engine case 2a from the front portion of the engine 2 and the other (exhaust pipe 2f) can be disposed respectively on the left side and the right side of the first oil pan (crankcase oil pan 110). In addition, the plural exhaust pipes 2d, 2e, 2f can be disposed below the second oil pan (transmission oil pan 140) in order for the plural exhaust pipes 2d, 2e, 2f to be joined together at the downstream side.

In the engine 2, the transmission case 30 for accommodating the transmission 60 is further provided. The transmission case 30 includes the plurality of the case sections (the right case section 30a, the left case section 30b, and the left end case section 30c) that can be divided from each other by the surfaces (the dividing surface S2 and the dividing surface S3) perpendicular to the axial center P2 of the drive pulley shaft 62. The second oil pan (transmission oil pan 140) is provided so as to close the opening 30d that is formed in one (left case section 30b) of the plural case sections (the right case section 30a, the left case section 30b, the left end case section 30c). Therefore, it is possible to improve the ease of assembling the engine 2 to facilitate producing the engine 2, and it is further possible to reliably avoid oil leakage from the second oil pan (transmission oil pan 140).

### Description of Reference Numerals and Symbol

- 1:: motorcycle
- 2:: engine
- 2a:: engine case
- 2b:: cylinder section
- 3:: front wheel
- 4:: rear wheel
- 5:: seat
- 6:: handlebar
- 7:: front fork
- 8:: driveline
- 9:: drive shaft
- 10:: silencer
- 11:: pivot shaft
- 12:: body cover
- 13:: cylinder block
- 14:: cylinder head
- 15:: cover
- 20:: crankcase
- 20a:: upper case section
- 20b:: lower case section
- 21:: crank chamber
- 22:: clutch chamber
- 22a:: left clutch shaft bearing
- 22b:: middle clutch shaft bearing
- 22c:: right clutch shaft bearing
- 23:: crankcase-side oil pan
- 24:: oil tank
- 29a:: right pump support section
- 29b:: left pump support section
- 29c:: left crankcase-side pump shaft bearing
- 29d:: right crankcase-side pump insertion section
- 30:: transmission case
- 30a:: right case section
- 30b:: left case section
- 30c:: left end case section
- 30d:: opening
- 31:: transmission chamber
- 32:: output chamber
- 33a:: right drive-side pulley shaft bearing
- 33b:: left drive-side pulley shaft bearing
- 34a:: right driven-side pulley shaft bearing
- 34b:: left driven-side pulley shaft bearing
- 37:: transmission-side pump support section
- 37c:: transmission-side pump insertion section
- 38:: transmission-side oil pan
- 40:: crankshaft
- 50:: clutch
- 53:: clutch shaft
- 60:: transmission
- 61:: drive pulley
- 62:: drive pulley shaft
- 63:: driven pulley
- 64:: driven pulley shaft
- 70:: output shaft
- 71:: coupling shaft
- 80:: transmission-side oil pump
- 81:: transmission-side pump shaft
- 82:: crankcase-side oil pump
- 85:: crankcase-side pump shaft
- 85a:: crankcase-side oil pump shaft
- 85b:: cooling water pump shaft
- 86:: intermediate gear
- 88:: engaging member
- 90:: fastening hole
- 91:: bolt member
- 100:: complex main shaft
- 101:: complex pump shaft
- 110:: crankcase oil pan
- 120:: crankcase-side oil pan
- 130:: oil tank
- 140:: transmission oil pan
- 141:: bottom surface
- 200:: control unit

## Claims

1. An engine (2) for mounting on a straddle-type vehicle (1), the engine (2) comprising:
a crankshaft (40);
a transmission (60) having a drive pulley (61) and a driven pulley (63);
a first oil pan (110) for receiving oil supplied to the crankshaft (40); and wherein
the crankshaft (40) extends in a vehicle width direction of a straddle-type vehicle (1) on which the engine (2) is to be mounted,
a drive pulley shaft (62) for driving the drive pulley (61) is disposed parallel to the crankshaft (40), **characterized by**:
a second oil pan (140) for receiving oil supplied to the transmission (60) and being separately formed from the first oil pan (110),
wherein
at least a portion of the first oil pan (110) and at least a portion of the second oil pan (140) are respectively disposed in parallel with the crankshaft (40) and the drive pulley shaft (62), and
the second oil pan (140) has a section (142) extending across at least one of: an engine center line (C2), and, in use, a vehicle center line (C1).

2. The engine according to Claim 1, wherein
a belt wound (65) between the drive pulley (61) and the driven pulley (63) is disposed on one side of the center line (C2,C1), and
the second oil pan (140) is formed in an L-shape having: a first section (142) disposed along said one side of the center line (C2,C1); and a second section (143) extending to the other side of the center line (C2,C1).

3. The engine according to Claim 2, wherein
the first oil pan (110) is formed in an L shape having: a third section (120) disposed along a longitudinal direction of the crankshaft (40); and a fourth section (120, 130) disposed in a position aligned with the first section (142) of the second oil pan (140) in the vehicle width direction.

4. The engine according to Claim 1, 2 or 3, wherein
a bottom surface (141) of the second oil pan (140) has a portion (141b, 141c) formed to extend upward as the portion extends away from the center line (C2,C1).

5. The engine according to Claim 1, 2, 3 or 4, wherein
ends of the crankshaft (40) are covered with a case (20) having a width (W0), and
the width (W1) of the first oil pan (110) and the width (W2) of the second oil pan (140) are within the width (W0) of the case (20).

6. The engine according to any preceding Claim, further comprising
a transmission case (30) for accommodating the transmission (60), wherein
the second oil pan (140) is disposed below the transmission case (30); and
a rear end (144) of the second oil pan (140) is disposed further rearward than a rear end (30h) of a portion of the transmission case (30) that covers rear of the driven pulley (63).

7. The engine according to any preceding Claim, comprising
a plurality of cylinders, wherein
the width (W2) of the second oil pan (140) is larger than the width (W1) of the first oil pan (110), and the bottom surface (141) of the second oil pan (140) is disposed higher than a bottom surface (121) of the first oil pan (110).

8. The engine according to any preceding Claim, further comprising
a transmission case (30) for accommodating the transmission (60), wherein
the transmission case (30) includes a plurality of case sections (30a, 30b, 30c) that can be divided by a surface (S2, S3) perpendicular to an axial center (P2) of the drive pulley shaft (62), and
the second oil pan (140) is provided so as to close an opening (30d) formed in one of the case sections (30b).

9. A straddle-type vehicle (1) **characterized by** comprising the engine (2) according to any preceding Claim.

## Patentansprüche

1. Motor (2) für das Montieren in einem Grätschsitz-Fahrzeug (1), wobei der Motor (2) aufweist:
eine Kurbelwelle (40);
ein Getriebe (60) mit einer Antriebsscheibe (61) und einer Abtriebsscheibe (63);
eine erste Ölwanne (110) für das Aufnehmen von Öl, das der Kurbelwelle (40) zugeführt wird; und wobei
sich die Kurbelwelle (40) in einer Breitenrichtung eines Grätschsitz-Fahrzeuges (1) erstreckt, in dem der Motor (2) montiert werden soll,
eine Antriebsscheibenwelle (62) für das Antreiben der Antriebsscheibe (61) parallel zur Kurbelwelle (40) angeordnet ist, **gekennzeichnet durch**:
eine zweite Ölwanne (140) für das Aufnehmen von Öl, das dem Getriebe (60) zugeführt wird, und die separat von der ersten Ölwanne (110) ausgebildet ist, wobei
mindestens ein Abschnitt der ersten Ölwanne (110) und mindestens ein Abschnitt der zweiten Ölwanne (140) jeweils parallel zur Kurbelwelle (40) und der Antriebsscheibenwelle (62) angeordnet sind und
die zweite Ölwanne (140) einen Abschnitt (142) aufweist, der sich über mindestens eine von einer Motormittellinie (C2) und, bei Benutzung, einer Fahrzeugmittellinie (C1) erstreckt.

2. Motor nach Anspruch 1, bei dem
ein Riemen (65), der zwischen der Antriebsscheibe (61) und der Abtriebsscheibe (63) gewickelt ist, auf einer Seite der Mittellinie (C2, C1) angeordnet ist, und
die zweite Ölwanne (140) in einer L-Form ausgebildet ist und aufweist: einen ersten Abschnitt (142), der entlang einer Seite der Mittellinie (C2, C1) angeordnet ist; und einen zweiten Abschnitt (143), der sich zur anderen Seite der Mittellinie (C2, C1) erstreckt.

3. Motor nach Anspruch 2, bei dem
die erste Ölwanne (110) in einer L-Form ausgebildet ist und aufweist: einen dritten Abschnitt (120), der entlang einer Längsrichtung der Kurbelwelle (40) angeordnet ist; und einen vierten Abschnitt (120, 130), der in einer Position angeordnet ist, die mit dem ersten Abschnitt (142) der zweiten Ölwanne (140) in der Breitenrichtung des Fahrzeuges ausgerichtet ist.

4. Motor nach Anspruch 1, 2 oder 3, bei dem
eine Bodenfläche (141) der zweiten Ölwanne (140) einen Abschnitt (141b, 141c) aufweist, der so ausgebildet ist, dass er sich nach oben erstreckt, während sich der Abschnitt von der Mittellinie (C2, C1) weg erstreckt.

5. Motor nach Anspruch 1, 2, 3 oder 4, bei dem
die Enden der Kurbelwelle (40) mit einem Gehäuse (20) mit einer Breite (W0) bedeckt sind, und
die Breite (W1) der ersten Ölwanne (110) und die Breite (W2) der zweiten Ölwanne (140) innerhalb der Breite (W0) des Gehäuses (20) liegen.

6. Motor nach einem der vorhergehenden Ansprüche, der außerdem aufweist:
ein Getriebegehäuse (30) für das Aufnehmen des Getriebes (60), wobei
die zweite Ölwanne (140) unterhalb des Getriebegehäuses (30) angeordnet ist; und
ein hinteres Ende (144) der zweiten Ölwanne (140) weiter nach hinten als ein hinteres Ende (30h) eines Abschnittes des Getriebegehäuses (30) angeordnet ist, das die Rückseite der Abtriebsscheibe (63) bedeckt.

7. Motor nach einem der vorhergehenden Ansprüche, der aufweist:
eine Vielzahl von Zylindern, wobei
die Breite (W2) der zweiten Ölwanne (140) größer ist als die Breite (W1) der ersten Ölwanne (110) und die Bodenfläche (141) der zweiten Ölwanne (140) höher angeordnet ist als eine Bodenfläche (121) der ersten Ölwanne (110).

8. Motor nach einem der vorhergehenden Ansprüche, der außerdem aufweist:
ein Getriebegehäuse (30) für das Aufnehmen des Getriebes (60), wobei
das Getriebegehäuse (30) eine Vielzahl von Gehäuseabschnitten (30a, 30b, 30c) umfasst, die durch eine Fläche (S2, S3) senkrecht zu einer axialen Mitte (P2) der Antriebsscheibenwelle (62) getrennt werden können, und
die zweite Ölwanne (140) so bereitgestellt wird, dass sie eine Öffnung (30d) verschließt, die in einem der Gehäuseabschnitte (30b) ausgebildet ist.

9. Grätschsitz-Fahrzeug (1), **dadurch gekennzeichnet, dass** es den Motor (2) nach einem der vorhergehenden Ansprüche aufweist.

## Revendications

1. Moteur (2), destiné à être monté sur un véhicule du type à enfourcher (1), le moteur (2) comprenant :
un vilebrequin (40) ;
une transmission (60), comportant une poulie d'entraînement (61) et une poulie entraînée (63) ;
un premier carter d'huile (110), destiné à recevoir l'huile amenée vers le vilebrequin (40) ; et dans lequel
le vilebrequin (40) s'étend dans une direction de la largeur d'un véhicule du type à enfourcher (1) sur lequel le moteur (2) doit être monté ;
un arbre de la poulie d'entraînement (62), destiné à entraîner la poulie d'entraînement (61), étant agencé de manière parallèle au vilebrequin (40) ; **caractérisé par** :
un deuxième carter d'huile (140), destiné à recevoir l'huile amenée vers la transmission (60) et formé séparément du premier carter d'huile (110), dans lequel :
au moins une partie du premier carter d'huile (110) et au moins une partie du deuxième carter d'huile (140) sont respectivement agencées de manière parallèle au vilebrequin (40) et à l'arbre de la poulie d'entraînement (62) ; et
le deuxième carter d'huile (140) comporte une section (142) s'étendant à travers au moins une ligne : une ligne médiane du moteur (C2), et, en service, une ligne médiane du véhicule (C1).

2. Moteur selon la revendication 1, dans lequel :
une courroie enroulée (65) entre la poulie d'entraînement (61) et la poulie entraînée (63), est agencée sur un côté de la ligne médiane (C2, C1) ; et
le deuxième carter d'huile (140) a une forme en L, comportant : une première section (142), agencée le long dudit un côté de la ligne médiane (C2, C1) ; et une deuxième section (143), s'étendant vers l'autre côté de la ligne médiane (C2, C1).

3. Moteur selon la revendication 2, dans lequel :
le premier carter d'huile (110) a une forme en L, comportant : une troisième section (120), agencée le long d'une direction longitudinale du vilebrequin (40) ; et une quatrième section (120, 130), agencée dans une position alignée avec la première section (142) du deuxième carter d'huile (140), dans la direction de la largeur du véhicule.

4. Moteur selon les revendications 1, 2 ou 3, dans lequel
une surface inférieure (141) du deuxième carter d'huile (140) comporte une partie (141b, 141c), formée de sorte à s'étendre vers le haut lorsque la partie s'étend à l'écart de la ligne médiane (C2, C1).

5. Moteur selon les revendications 1, 2, 3 oui 4, dans lequel :
les extrémités du vilebrequin (40) sont recouvertes d'un boîtier (20) ayant une largeur (WO) ; et
la largeur (W1) du premier carter d'huile (110) et la largeur (W2) du deuxième carter d'huile (140) se situent dans le cadre de la largeur (WO) du boîtier (20).

6. Moteur selon l'une quelconque des revendications précédentes, comprenant en outre :
un boîtier de transmission (30) pour recevoir la transmission (60), dans lequel
le deuxième carter d'huile (140) est agencé au-dessous du boîtier de la transmission (30) ; et
une extrémité arrière (144) du deuxième carter d'huile (140) est agencée plus vers l'arrière qu'une extrémité arrière (30h) d'une partie du boîtier de la transmission (30) recouvrant la poulie entraînée (63).

7. Moteur selon l'une quelconque des revendications précédentes, comprenant :
plusieurs cylindres, dans lequel :
la largeur (W2) du deuxième carter d'huile (140) est supérieure à la largeur (W1) du premier carter d'huile (110), et la surface inférieure (141) du deuxième carter d'huile (140) est agencée à un niveau plus haut qu'une surface inférieure (121) du premier carter d'huile (110).

8. Moteur selon l'une quelconque des revendications précédentes, comprenant en outre :
un boîtier de transmission (30), pour recevoir la transmission (60), dans lequel :
le boîtier de la transmission (30) englobe plusieurs sections de boîtier (30a, 30b, 30c) pouvant être divisées par une surface (S2, S3) perpendiculaire à un centre axial (P2) de l'arbre de la poulie d'entraînement (62) ; et
le deuxième carter d'huile (140) est agencé de sorte à fermer une ouverture (30d) formée dans une des sections du boîtier (30b).

9. Véhicule du type à enfourcher (1), **caractérisé en ce qu'**il comprend le moteur (2) selon l'une quelconque des revendications précédentes.
